(19) **Europäisches Patentamt European Patent Office Office européen des brevets**

(11) **EP 4 538 038 A1**

(12) **EUROPEAN PATENT APPLICATION**
published in accordance with Art. 153(4) EPC

(43) Date of publication:
16.04.2025  Bulletin 2025/16

(21) Application number: 23819506.9

(22) Date of filing: 19.04.2023

(51) International Patent Classification (IPC):
*B32B 27/30* (2006.01)       *B29C 45/14* (2006.01)
*B32B 27/32* (2006.01)

(52) Cooperative Patent Classification (CPC):
B29C 45/14; B32B 27/30; B32B 27/32

(86) International application number:
PCT/JP2023/015587

(87) International publication number:
WO 2023/238519 (14.12.2023 Gazette 2023/50)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.06.2022  JP 2022092456

(71) Applicant: **Asahi Kasei Kabushiki Kaisha
Tokyo 1000006 (JP)**

(72) Inventors:
• **MATSUOKA, Yuta
  Tokyo 100-0006 (JP)**
• **SUKEGAWA, Takashi
  Tokyo 100-0006 (JP)**
• **HOSHINA, Toshikazu
  Tokyo 100-0006 (JP)**
• **TSUJI, Takahiro
  Tokyo 100-0006 (JP)**

(74) Representative: **Strehl & Partner mbB
Maximilianstrasse 54
80538 München (DE)**

(54) **LAMINATE AND METHOD FOR MANUFACTURING LAMINATE**

(57) A laminate containing: a layer (I) mainly composed of an acrylic resin; a layer (II) mainly composed of a polyolefin resin; and an adhesive layer (III) provided between the layer mainly composed of an acrylic resin and the layer mainly composed of a polyolefin resin, wherein the adhesive layer (III) is formed from an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and the hydrogenated conjugated diene block copolymer satisfies predetermined requirements.

EP 4 538 038 A1

**Description**

Technical Field

The present invention relates to a laminate and a method for producing the laminate.

Background Art

Conventionally, as molded bodies with excellent designability, transparency, and decorativeness, laminates have been proposed that have, from the viewpoint of moldability and cost-effectiveness, a base composed of a polyolefin resin such as polypropylene resin and an acrylic resin layer with excellent appearance.

For example, Patent Document 1 proposes a laminate consisting of a base containing a polypropylene resin and a thermoplastic resin as the main components, a sealing layer, and an acrylic resin layer.

Meanwhile, there is a problem that polyolefin resins and acrylic resins are difficult to adhere to each other from the viewpoint of solubility parameter and other factors. To address such a problem, there have been proposed laminates that use solvent adhesives such as acrylic adhesives and urethane adhesives as the adhesive.

However, from the viewpoint of VOC (volatile organic compounds) reduction, there is a growing demand for laminate molding method technology that does not use organic solvents.

For example, Patent Document 2 proposes a laminate of a base made of a polypropylene resin and an acrylic resin layer, in which an adhesive layer containing a polypropylene resin as a non-solvent adhesive is provided on the base made of a polypropylene resin.

Citation List

Patent Document

Patent Document 1: Japanese Patent Laid-Open No. 2021-181232
Patent Document 2: Japanese Patent Laid-Open No. 2013-14027

Summary of Invention

Technical Problem

However, the laminate disclosed in Patent Document 2 has a problem that there is still room for improvement from the viewpoint of adhesive strength.

Therefore, an object of the present invention is to provide a laminate that does not use organic solvents, has good appearance, and has high adhesive strength.

Solution to Problem

As a result of diligent investigations to solve the problems of the prior art, the present inventors have found that a laminate that does not use organic solvents, has good appearance, and has high adhesive strength can be formed by providing an adhesive layer mainly composed of a hydrogenated conjugated diene block copolymer having a specific structure or by compounding a hydrogenated conjugated diene block copolymer, which serves as an adhesive component, in a layer mainly composed of a polyolefin resin, in order to allow a layer mainly composed of a polyolefin resin and a layer mainly composed of an acrylic resin to adhere to each other, leading to the completion of the present invention.

Thus, the present invention is as follows.

[1] A laminate containing:

a layer (I) mainly composed of an acrylic resin;
a layer (II) mainly composed of a polyolefin resin; and
an adhesive layer (III) provided between the layer mainly composed of an acrylic resin and the layer mainly composed of a polyolefin resin,
wherein the adhesive layer (III) is formed from an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and the hydrogenated conjugated diene block copolymer satisfies two or more of the following conditions (i) to (iv) :

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and a total content of the conjugated diene monomer units is 100%, a content of the units (a) derived from 1,2-bond and/or 3,4-bond is 50% or more;
<condition (iii)>
the hydrogenated conjugated diene block copolymer has at least one polymer block (C); and
<condition (iv)>
a content of vinyl aromatic monomer units in the hydrogenated conjugated diene block copolymer is 25% by mass or more and 80% by mass or less.

[2] The laminate according to [1],
wherein the hydrogenated conjugated diene block copolymer satisfies the condition (i), the condition (iii), and the condition (iv).
[3] The laminate according to [1],
wherein the hydrogenated conjugated diene block copolymer satisfies the condition (ii), the condition (iii), and the condition (iv).
[4] The laminate according to [1],
wherein the hydrogenated conjugated diene block copolymer satisfies the condition (i) and the condition (ii), does not satisfy the condition (iv), and further satisfies the following condition (v):
<condition (v)>
a content of vinyl aromatic monomer units in the hydrogenated conjugated diene block copolymer is less than 25% by mass.
[5] The laminate according to any one of [1] to [4],
wherein the hydrogenated conjugated diene block copolymer satisfies the condition (i), and the polar groups that the hydrogenated conjugated diene block copolymer has are of at least one selected from the group consisting of an acid anhydride group, an amino group, a dicarboxyl group, a carboxyl group, an epoxy group, and an oxetanyl group.
[6] The laminate according to [5],
wherein the polar groups that the hydrogenated conjugated diene block copolymer has are amino groups.
[7] The laminate according to any one of [1] to [6],
wherein a hydrogenated ratio of the hydrogenated conjugated diene block copolymer is 90% or less.
[8] The laminate according to any one of [1] to [7],
wherein the layer (I) mainly composed of an acrylic resin has a thickness of 1.5 mm or less.
[9] The laminate according to any one of [1] to [3], [5] to [8]
wherein the hydrogenated conjugated diene block copolymer satisfies the condition (iv).
[10] A method for producing the laminate according to [1], the method containing:

a step of laminating the layer (I) mainly composed of an acrylic resin and the adhesive layer (III) so that they are brought into contact with each other; and
a step of laminating the layer (II) mainly composed of a polyolefin resin so that the adhesive layer (III) and the layer (II) mainly composed of a polyolefin resin are brought into contact with each other.

[11] The method for producing the laminate according to [10], wherein the layer (I) mainly composed of an acrylic resin has a thickness of 1.5 mm or less.
[12] The method for producing the laminate according to [10] or [11],

in the step of laminating the layer (I) mainly composed of an acrylic resin and the adhesive layer (III),
the layer (I) mainly composed of an acrylic resin and the adhesive layer (III) are laminated in a molten state.

[13] The method for producing the laminate according to any one of [10] to [12],

in the step of laminating the layer (II) mainly composed of a polyolefin resin,
a laminate having the layer (I) mainly composed of an acrylic resin and the adhesive layer (III) is installed in a mold, and
the polyolefin resin is poured into the mold in a molten state.

[14] A laminate containing:

a layer (I) mainly composed of an acrylic resin; and
a layer (IV) containing a polyolefin resin and an adhesive component,
wherein amounts of the polyolefin resin and the adhesive component are polyolefin resin/adhesive component = 30/70 to 95/5 in mass ratio,
the adhesive component is an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and
the hydrogenated conjugated diene block copolymer satisfies two or more of the following conditions (i) to (iv) :

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and a total content of the conjugated diene monomer units is 100%, a content of the units (a) derived from 1,2-bond and/or 3,4-bond is 50% or more;
<condition (iii)>
the hydrogenated conjugated diene block copolymer has at least one polymer block (C); and
<condition (iv)>
a content of vinyl aromatic monomer units in the hydrogenated conjugated diene block copolymer is 25% by mass or more and 80% by mass or less.

[15] The laminate according to [14],
wherein the hydrogenated conjugated diene block copolymer satisfies the condition (i), the condition (iii), and the condition (iv).
[16] The laminate according to [14],
wherein the hydrogenated conjugated diene block copolymer satisfies the condition (ii), the condition (iii), and the condition (iv).
[17] The laminate according to [14],
wherein the hydrogenated conjugated diene block copolymer satisfies the condition (i) and the condition (ii), does not satisfy the condition (iv), and further satisfies the following condition (v):
<condition (v)>
a content of vinyl aromatic monomer units in the hydrogenated conjugated diene block copolymer is less than 25% by mass.
[18] The laminate according to [14] or [15],
wherein the hydrogenated conjugated diene block copolymer satisfies the condition (i), and the polar groups that the hydrogenated conjugated diene block copolymer has are of at least one selected from the group consisting of an acid anhydride group, an amino group, a dicarboxyl group, a carboxyl group, an epoxy group, and an oxetanyl group.

Advantageous Effects of Invention

According to the present invention, there can be provided a laminate that does not use organic solvents, has good appearance, and has high adhesive strength.

Description of Embodiments

From now on, a mode for performing the present invention (hereinafter, referred to as "the present embodiment") will be described in detail.
Note that the following present embodiment is an illustration for explaining the present invention and is not intended to limit the present invention to the following contents. The present invention can be performed with modifications as appropriate within the scope of its gist.

[Laminate]

The laminate of the present embodiment has the following two forms. They are described as the laminate of the first embodiment and the laminate of the second embodiment, respectively.
The laminate of the first embodiment is a laminate having:

a layer (I) mainly composed of an acrylic resin (hereinafter, sometimes referred to as layer (I));
a layer (II) mainly composed of a polyolefin resin (hereinafter, sometimes referred to as layer (II)); and
an adhesive layer (III) provided between the layer mainly composed of an acrylic resin and the layer mainly composed of a polyolefin resin (hereinafter, sometimes referred to as layer (III)).

The adhesive layer (III) is formed from an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and
the hydrogenated conjugated diene block copolymer satisfies two or more of the following conditions (i) to (iv) :

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and the total content of the conjugated diene monomer units is 100%, the content of the units (a) derived from 1,2-bond and/or 3,4-bond is 50% or more;
<condition (iii)>
the hydrogenated conjugated diene block copolymer has at least one polymer block (C); and
<condition (iv)>
the content of vinyl aromatic monomer units in the hydrogenated conjugated diene block copolymer is 25% by mass or more and 80% by mass or less.

Since the laminate of the first embodiment has the adhesive layer (III) formed from an adhesive component as a single layer, the stress at the time of impact can be dispersed by the highly flexible hydrogenated conjugated diene block copolymer, and the laminate as a whole exhibits high impact resistance.
The laminate of the second embodiment is a laminate having:

a layer (I) mainly composed of an acrylic resin; and
a layer (IV) containing a polyolefin resin and an adhesive component (hereinafter, sometimes referred to as layer (IV)).

The amounts of the polyolefin resin and the adhesive component are polyolefin resin/adhesive component = 30/70 to 95/5 in mass ratio.
The adhesive component is an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and
the hydrogenated conjugated diene block copolymer satisfies two or more of the following conditions (i) to (iv) :

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and the total content of the conjugated diene monomer units is 100%, the content of the units (a) derived from 1,2-bond and/or 3,4-bond is 50% or more;

<condition (iii)>
the hydrogenated conjugated diene block copolymer has at least one polymer block (C); and
<condition (iv)>
the content of vinyl aromatic monomer units in the hydrogenated conjugated diene block copolymer is 25% by mass or more and 80% by mass or less.

The laminate of the second embodiment has a layer (I) mainly composed of an acrylic resin and a layer (IV) containing a polyolefin resin and an adhesive component.

The layer (IV) is the form in which an adhesive component is contained in the layer (II) mainly composed of a polyolefin resin, which constitutes the above-mentioned laminate of the first embodiment.

According to the laminate of the second embodiment, contamination of the adhesive component into the layer (I) mainly composed of an acrylic resin is suppressed, resulting in good appearance.

The laminate of the first embodiment and the laminate of the second embodiment have in common that they have a layer (I) mainly composed of an acrylic resin and a layer mainly composed of a polyolefin resin, and that they have a specific hydrogenated conjugated diene block copolymer as the main component of the adhesive component.

The laminate of the first embodiment has an independent adhesive layer (III).

On the other hand, the laminate of the second embodiment has a layer (IV) containing an adhesive component and a polyolefin resin.

While the laminate of the first embodiment is excellent in impact resistance, the hydrogenated conjugated diene block copolymer in the adhesive layer (III) slightly melts with the layer (I) mainly composed of an acrylic resin when molding the laminate, resulting in a tendency to have inferior appearance compared to the laminate of the second embodiment. Therefore, it is preferable to select an aspect depending on whether the application requires impact resistance or good appearance.

(Layer (I))

The laminates of the first and second embodiments have a layer (I) mainly composed of an acrylic resin.

By using an acrylic resin as the main component, a laminate that is excellent in appearance can be obtained.

Here, "mainly composed of an acrylic resin" refers to that the acrylic resin is 30% by mass or more in 100% by mass of the entire layer (I), preferably 40% by mass or more, more preferably 50% by mass or more, and still more preferably 60% by mass or more.

Examples of the acrylic resin include, but are not limited to, acrylic resins such as polymethyl methacrylate, polyethyl methacrylate, polybutyl methacrylate, methyl methacrylate-butyl methacrylate copolymer, and methyl methacrylate-styrene copolymer. Furthermore, as the acrylic resin, mixed resins of the above-mentioned acrylic resins and thermoplastic polyurethane resins, mixed resins of the above-mentioned acrylic resins and acrylic rubbers, and others can be used.

The layer (I) mainly composed of an acrylic resin can contain general additives, such as stabilizers, lubricants, processing aids, impact resistance aids, fillers, colorants, matting agents, and ultraviolet absorbers, as necessary, as components other than the acrylic resin. In such a case, the content of the acrylic resin in the layer (I) is calculated in terms of the mixed materials as a whole.

Examples of commercially available products of the acrylic resin include ACRYPET (manufactured by Mitsubishi Rayon Co., Ltd.), SUMIPEX (manufactured by Sumitomo Chemical Co., Ltd.), and DELPET (manufactured by Asahi Kasei Corporation).

(Layer (II))

The laminate of the first embodiment has a layer (II) mainly composed of a polyolefin resin.

The layer (II) mainly composed of a polyolefin resin is mainly composed of a polyolefin resin other than the hydrogenated conjugated diene block copolymer, which will be mentioned later.

Here, "mainly composed of a polyolefin resin" refers to that the polyolefin resin is 30% by mass or more in 100% by mass of the entire layer (II), preferably 40% by mass or more, more preferably 50% by mass or more, and still more preferably 60% by mass or more.

The layer (II) in the laminate of the first embodiment shall not contain the adhesive component, which will be mentioned later.

(Layer (IV))

The laminate of the second embodiment has a layer (IV) containing a polyolefin resin and an adhesive component.

The layer (IV) contains a polyolefin resin other than the hydrogenated conjugated diene block copolymer, which will be mentioned later, and the adhesive component, which will be mentioned later. In the layer (IV), the amounts of the polyolefin resin and the adhesive component are polyolefin resin/adhesive component = 30/70 to 95/5 in mass ratio.

The layer (II) and the layer (IV) have in common preferred forms of the polyolefin resin.

<Polyolefin resin>

Examples of the polyolefin resin used in the layer (II) and the layer (IV) include, but are not limited to, a polyethylene resin and a polypropylene resin.

Examples of the polyethylene resin include a low density polyethylene, a linear low density polyethylene, a high density polyethylene, and a copolymer of ethylene and an $\alpha$-olefin having 3 to 8 carbon atoms. In the case where the polyethylene resin is a copolymer of ethylene and an $\alpha$-olefin having 3 to 8 carbon atoms, examples of the $\alpha$-olefin in the copolymer include propylene, 1-butene, isobutene, 1-pentene, 1-hexene, 4-methyl-1-pentene, and 1-octene.

Examples of the polypropylene resin include a propylene homopolymer synthesized using a Ziegler-Natta catalyst, and a random or block copolymer of propylene and an $\alpha$-olefin. In the case of a copolymer of propylene and an $\alpha$-olefin, the proportion of the $\alpha$-olefin is preferably 30% by mass or less, more preferably 35% by mass or less, with respect to 100% by mass of the polypropylene resin.

Specific examples of the polypropylene resin include a propylene homopolymer and a copolymer of propylene and an $\alpha$-olefin having 2 to 8 carbon atoms (hereinafter, also referred to as "propylene resin"). In the case where the polypropylene resin is a copolymer of propylene and an $\alpha$-olefin having 2 to 8 carbon atoms, examples of the $\alpha$-olefin in the copolymer include ethylene, 1-butene, isobutene, 1-pentene, 1-hexene, 4-methyl-1-pentene, and 1-octene.

These polyolefin resins can be synthesized by conventional known methods.

From the viewpoint of heat resistance (heat aging resistance) and moldability, a polypropylene resin is preferred as the polyolefin resin.

The polyolefin resin used in the layer (II) and the layer (IV) normally has a melt flow rate (MFR) of 1.0 to 1000 g/10 min, preferably 5.0 to 100 g/10 min. When the MFR of the polyolefin resin is 1.0 g/10 min or more, the molding processability (flowability) of the layer (II) and the layer (IV) tends to be improved. There is also a tendency that deterioration in the appearance of the molded product (generation of flow marks) can be suppressed.

The polyolefin resin used in the layer (II) and the layer (IV) may be used alone or in combination of two or more.

From the viewpoint of improving the impact resistance of the layers, hardness, and adjusting the flowability, the layer (II) and the layer (IV) may also contain an olefinic elastomer. The olefinic elastomer is, for example, the copolymer of ethylene and/or propylene and an $\alpha$-olefin having 3 to 8 carbon atoms, which is listed as the above-mentioned polyolefin resin, in which the proportion of the $\alpha$-olefin is at or above the preferred proportion previously mentioned. Specifically, the proportion of the $\alpha$-olefin is 30% by mass or more, preferably greater than 30% by mass, still more preferably 35% by mass or more, and more preferably 40% by mass or more, with respect to 100% by mass of the entire olefinic elastomer. When the proportion of the $\alpha$-olefin is within the above-described range, the olefinic elastomer tends to have low stiffness, which can improve the impact resistance of the laminate of the present embodiment.

(Adhesive layer (III))

The laminate of the first embodiment has an adhesive layer (III) formed from an adhesive component between the above-mentioned layer (I) and layer (II).

(Layer (IV) containing polyolefin resin and adhesive component)

The laminate of the second embodiment has a layer (IV) containing the above-mentioned polyolefin resin and an adhesive component.

In the laminate of the first embodiment, the adhesive layer (III) is an independent layer formed from an adhesive component mainly composed of the hydrogenated conjugated diene block copolymer, which will be mentioned later.

Here, "mainly composed of the hydrogenated conjugated diene block copolymer" refers to that the content of the hydrogenated conjugated diene block copolymer in the adhesive component is 50% by mass or more, and other components may be contained to the extent that appearance and adhesive strength are not impaired. From the viewpoint of adhesive strength and appearance previously mentioned, the content of the hydrogenated conjugated diene block copolymer in the adhesive component is preferably 60% by mass or more, more preferably 70% by mass or more, still more preferably 80% by mass or more, even more preferably 90% by mass or more, and even further preferably 95% by mass or more.

In the laminate of the second embodiment, the layer (IV) contains the polyolefin resin previously mentioned and the adhesive component, which will be mentioned later.

The mass ratio of the polyolefin resin and the adhesive component is polyolefin resin/adhesive component = 30/70 to 95/5, preferably 35/65 to 95/5, more preferably 40/60 to 95/5, still more preferably 45/55 to 95/5, even more preferably 50/50 to 95/5, and even further preferably 60/40 to 90/10.

Note that the content of the hydrogenated conjugated diene block copolymer in the adhesive component is the same as in the case of the above-mentioned adhesive layer (III).

<Adhesive component>

In both of the first embodiment and the second embodiment, the adhesive component is formed from an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated. The hydrogenated conjugated diene block copolymer satisfies two or more of the following conditions (i) to (iv).

The configurations of the polymer block (A), polymer block (B), and polymer block (C) will be mentioned later.

Condition (i):

The hydrogenated conjugated diene block copolymer has polar groups.

Condition (ii):

A conjugated diene block copolymer before hydrogenation of the hydrogenated conjugated diene block copolymer contains units derived from 1,2-bond and/or 3,4-bond of a conjugated diene compound (hereinafter, also simply referred to as "units (a)") and units derived from 1,4-bond (hereinafter, also simply referred to as "units (b)"), and the content of the units (a) is 50% or more (vinyl bond content) when the content of the conjugated diene monomer units is 100%.

Condition (iii):

The hydrogenated conjugated diene block copolymer has at least one polymer block (C).

Condition (iv):

The content of vinyl aromatic monomer units in the hydrogenated conjugated diene block copolymer is 25% by mass or more and 80% by mass or less.

Due to high compatibility of the adhesive component with the acrylic resin and the polyolefin resin, the laminate of the present embodiment exhibits high adhesive strength. Although it would be simple enough that a hydrogenated conjugated diene block copolymer with a solubility parameter (sp value) close to that of the both resins should be contained in the adhesive component, the acrylic resin has a higher solubility parameter (sp value) compared to the polyolefin resin. In order to allow the layer (I) and the layer (II), which are mainly composed of resins with different solubility parameters, to adhere to each other, the hydrogenated conjugated diene block copolymer contained in the adhesive component is required to have a polymer skeleton that is compatible with the both resins.

In order to improve compatibility with the acrylic resin, it is preferable that the hydrogenated conjugated diene block copolymer satisfies the condition (i), and/or the condition (iii), and/or the condition (iv), from the viewpoint of solubility parameter (sp value).

In order to improve compatibility with the polyolefin resin, it is preferable that the hydrogenated conjugated diene block copolymer satisfies the condition (ii), and/or the condition (iii), and/or the condition (iv).

Accordingly, when the hydrogenated conjugated diene block copolymer satisfies two or more of the conditions (i) to (iv), it has high compatibility with the layer (I) and the layer (II), and in particular, it has excellent compatibility with the polyolefin resin from the viewpoint of solubility parameter.

Therefore, a laminate having high adhesive strength can be obtained without impairing the appearance of the layer (I) mainly composed of an acrylic resin, both in the case of a configuration having the adhesive layer (III), which is a single layer of adhesive component, and in the case of a configuration having the layer (IV) containing a polyolefin resin and an adhesive component.

The adhesive component may contain other adhesive components other than the hydrogenated conjugated diene block copolymer to the extent that appearance and adhesive strength are not impaired.

As in the condition (i), when the hydrogenated conjugated diene block copolymer used in the adhesive component has polar groups, the sp value of the hydrogenated conjugated diene block copolymer is improved. This improves the compatibility and reactivity of the acrylic resin in the layer (I) and the hydrogenated conjugated diene block copolymer.

Vinyl aromatic compounds are known to have higher sp values than conjugated diene compounds. Hence, as in the condition (iv), when the content of vinyl aromatic monomer units in the hydrogenated conjugated diene block copolymer is 25% by mass or more and 80% by mass or less, the hydrogenated conjugated diene block copolymer has excellent compatibility with each of the layer (I) and the layer (II).

When the content of vinyl aromatic monomer units in the hydrogenated conjugated diene block copolymer is 25% by mass or more, the sp value of the hydrogenated conjugated diene block copolymer is sufficiently high, and therefore, the compatibility with the layer (I) mainly composed of an acrylic resin is high and sufficient adhesive strength can be obtained.

When the content of vinyl aromatic monomer units in the hydrogenated conjugated diene block copolymer is 80% by mass or less, the sp value can be suppressed from being too high, the compatibility with the layer (II) mainly composed of a polyolefin resin is high, and sufficient adhesive strength can be obtained.

In the condition (iv), the content of vinyl aromatic monomer units in the hydrogenated conjugated diene block copolymer is preferably 30 to 75% by mass, more preferably 35 to 70% by mass, still more preferably 40 to 70% by mass, even more preferably 45 to 70% by mass, even further preferably 50 to 70% by mass, and particularly preferably 55 to 70% by mass.

The content of vinyl aromatic monomer units in the hydrogenated conjugated diene block copolymer can be controlled to the above-described numerical range by adjusting the amount of a vinyl aromatic compound added in the polymerization step and the polymerization time.

Also, from the viewpoint of obtaining sufficient adhesive strength, as in the condition (iii), it is preferable that the hydrogenated conjugated diene block copolymer have at least one polymer block (C) having vinyl aromatic monomer units and conjugated diene monomer units. Due to this, the compatibility of the hydrogenated conjugated diene block copolymer with each of the layer (I) and the layer (II) is excellent, and the adhesive strength is improved.

It is also known that the units (a) (hereinafter, sometimes referred to as vinyl bonds) have superior compatibility with polyolefin resins compared to the units (b). Therefore, when the hydrogenated conjugated diene block copolymer has a vinyl bond content of 50% or more, the compatibility with the polyolefin resin in the layer (II) is improved and the adhesive strength is improved.

The vinyl bond content of the hydrogenated conjugated diene block copolymer before hydrogenation is preferably 55% or more, more preferably 60% or more, still more preferably 65% or more, even more preferably 67% or more, and even further preferably 70% or more.

The vinyl bond content can be measured by the method described in the Examples mentioned later, and can be controlled to the above-described numerical range by the use of a vinyl bond content adjusting agent (vinylating agent), as will be mentioned later.

Also, in the hydrogenated conjugated diene block copolymer in the adhesive component, unsaturated bonds derived from a conjugated diene compound are hydrogenated.

Hydrogenation of the conjugated diene monomer units, which are excellent in compatibility with the polyolefin resin in the layer (II), results in a smaller sp value difference between the polymer block (B) and the polymer block (C) in the hydrogenated conjugated diene block polymer and the polyolefin resin, improving the compatibility of the hydrogenated conjugated diene block copolymer and the layer (II).

Furthermore, the hydrogenation reduces thermally unstable unsaturated bonds, which tends to improve heat aging resistance, weather resistance, and mold staining property (characteristic that prevents mold staining).

From the above-mentioned viewpoint, the hydrogenation ratio (hydrogenated ratio) is preferably 80% or more, more preferably 83% or more, and still more preferably 85% or more.

Also, as will be mentioned later, from the viewpoint of heat cycle resistance and hot water resistance of the laminate of the present embodiment, the hydrogenation ratio of the hydrogenated conjugated diene block copolymer is preferably 90% or less. Such a case will be mentioned later.

The hydrogenation ratio of the hydrogenated conjugated diene block copolymer can be measured using a nuclear magnetic resonance device (NMR) or the like, and can be specifically measured by the method described in the Examples.

Also, the hydrogenation ratio can be controlled to the above-described numerical range by adjusting the amount of hydrogen that is allowed to react during the hydrogenation reaction, for example.

When the tan$\delta$ peak temperature in viscoelasticity measurement of the adhesive component is present at the environmental temperature where the laminate of the present embodiment is used, a laminate tends to be obtained that is excellent in vibration damping and noise reduction properties. When the hydrogenated conjugated diene block copolymer contained in the adhesive component satisfies the condition (iii) and the condition (iv), the tan$\delta$ peak temperature of the hydrogenated conjugated diene block copolymer tends to be 0°C or higher. Also, when the condition (i) is satisfied, high adhesive strength is exhibited, which tends to contribute to improved vibration damping property.

From the above-mentioned viewpoints, when the hydrogenated conjugated diene block copolymer satisfies the condition (i), condition (iii), and condition (iv), a laminate tends to be obtained that is excellent in vibration damping property at normal temperature, adhesive strength, and impact resistance, and that has good appearance.

When the hydrogenated conjugated diene block copolymer used in the adhesive component satisfies the condition (i), decomposition products derived from a modifying agent used when bonding polar groups to the hydrogenated conjugated diene block copolymer are volatilized during molding, which tends to cause mold staining and to worsen the working environment.

In the case where the hydrogenated conjugated diene block copolymer satisfies the condition (i), from the viewpoint of suppressing decomposition products derived from a modifying agent and providing good molding cyclability and working environment, it is preferable that the amount of unreacted modifying agent is small, and the amount of unreacted modifying agent is preferably 0.2% by mass or less, more preferably 0.15% by mass or less, still more preferably 0.1% by mass or less, and even more preferably 0.05% by mass or less, with respect to the hydrogenated conjugated diene block copolymer after the modifying step. Similarly, from the viewpoint of suppressing mold staining, it is preferable that the reaction ratio of the hydrogenated conjugated diene block copolymer and the modifying agent mentioned later is high.

As for the method for bonding polar groups to the hydrogenated conjugated diene block copolymer, examples of preferred methods include a method in which they are introduced by using polymerization initiators having the predetermined functional groups that become polar groups mentioned later, a method in which unsaturated monomers having functional groups are polymerized, a method in which functional groups are formed at the living terminals, and a method in which modifying agents having functional groups are allowed to undergo addition reactions.

Examples of the polar groups include, but are not limited to, an acid anhydride group, an amino group, a dicarboxyl group, a carboxyl group, an epoxy group, and an oxetanyl group. From the viewpoint of the reaction ratio previously mentioned, an amino group and an epoxy group are preferred, and from the viewpoint of the ease of setting the amount of unreacted modifying agent to be reduced by controlling the amount added, an amino group is more preferable.

In contrast, when the hydrogenated conjugated diene block copolymer satisfies the condition (ii), condition (iii), and condition (iv), decomposition of the hydrogenated conjugated diene block copolymer is less likely to occur and volatilization of decomposition products is low, which tends to ensure excellent molding cyclability and working environment.

In the case where the temperature at which the laminate of the present embodiment is used is low temperature (0°C or lower), it is preferable to use an adhesive component with high flexibility. When the adhesive component has high flexibility, stress can be dispersed even at low temperatures, and high impact resistance tends to be exhibited in the laminate of the present embodiment.

From the above-mentioned viewpoints, when the hydrogenated conjugated diene block copolymer satisfies the condition (i), the condition (ii), and the following condition (v), the refractive indices of the acrylic resin and the hydrogenated conjugated diene block copolymer are likely to be close and the laminate of the present embodiment tends to have higher transparency, and a laminate tends to be obtained that is excellent in impact resistance at low temperatures and adhesive strength.

Condition (v): The content of vinyl aromatic monomer units in the hydrogenated conjugated diene block copolymer is less than 25% by mass.

In the condition (v), the content of vinyl aromatic monomer units in the hydrogenated conjugated diene block copolymer is preferably 20% by mass or less, more preferably 17% by mass or less, still more preferably 15% by mass or less, and even more preferably 13% by mass or less.

The content of vinyl aromatic monomer units in the hydrogenated conjugated diene block copolymer can be controlled to the above-described numerical range by adjusting the amount of a vinyl aromatic compound added in the polymerization step and the polymerization time.

In the case where the hydrogenated conjugated diene block copolymer used in the adhesive component satisfies the condition (i), from the viewpoint of compatibility with the layer (I) mainly composed of an acrylic resin previously mentioned, the polar groups are preferably of at least one selected from the group consisting of an acid anhydride group, an amino group, a dicarboxyl group, a carboxyl group, an epoxy group, and an oxetanyl group, as mentioned above, and more preferably of at least one selected from the group consisting of an acid anhydride group, an amino group, a dicarboxyl group, and a carboxyl group.

When the hydrogenated conjugated diene block copolymer has polar groups of at least one selected from the above-mentioned group, the hydrogenated conjugated diene block copolymer has affinity and/or reactivity with the acrylic resin, and a laminate with high adhesive strength tends to be obtained. Affinity refers to the ability to generate at least one intermolecular force selected from the group consisting of ionic interactions, hydrogen bonds, dipole interactions, and van der Waals forces between each component. Reactivity means that the polar groups of each component can be covalently bonded to each other. When polar groups react with each other, for example, when the OH of a carboxyl group is eliminated, the original polar group changes or disappears, but if this forms a covalent bond, it is included in the definition that the polar groups exhibit "reactivity" with each other.

From the viewpoint of adhesiveness, it is preferable to have affinity and reactivity, and from the viewpoint of reactivity, the polar groups that the hydrogenated conjugated diene block copolymer has are preferably amino groups.

The amount of polar groups that the hydrogenated conjugated diene block copolymer has is not particularly limited, but from the viewpoint of compatibility with the layer (I) mainly composed of an acrylic resin, it is preferably 0.01% by mass or more with respect to the entire hydrogenated conjugated diene block copolymer. It is more preferably 0.05% by mass or more, and still more preferably 0.10% by mass or more.

The amount of polar groups that the hydrogenated conjugated diene block copolymer has is preferably 20% by mass or less from the viewpoint of mold staining property and working environment previously mentioned.

The amount of polar groups that the hydrogenated conjugated diene block copolymer has can be controlled to the above-described numerical range by adjusting the reaction conditions with a compound for forming these polar groups during the production process of the hydrogenated conjugated diene block copolymer, such as the amount of compound added, reaction temperature, and reaction time.

In recent years, in the case where decorative laminates are used as materials for automobile interiors and exteriors, etc., the decorative laminates tend to be required to have high adhesiveness (heat cycle resistance and hot water resistance) not only at normal temperature, but also in a wide temperature range and under a high temperature and high humidity environment.

In order to achieve sufficient heat cycle resistance and hot water resistance, it is preferable that the adhesive component used in the layer (III) has polar groups that have reactivity with the acrylic resin previously mentioned.

In the case where the thickness of the layer (I) is thin, in order for the laminate of the present embodiment to have sufficient heat cycle resistance and/or hot water resistance, high compatibility of the hydrogenated conjugated diene block copolymer and the acrylic resin is required not only near the interface between the layer (I) and the layer (III), but also in the vicinity of the outer layer; however, if the hydrogenated conjugated diene block copolymer and the acrylic resin are compatible in the vicinity of the outer layer, the appearance tends to be impaired and the adhesiveness with the layer (II) tends to be reduced.

In view of such problems, from the viewpoint of obtaining sufficient heat cycle resistance and/or hot water resistance, the polar groups that the hydrogenated conjugated diene copolymer has are preferably amino groups from the viewpoint of exhibiting reactivity with the acrylic resin.

Also, from the viewpoint of increasing the covalent bonds between the acrylic resin in the layer (I) and the hydrogenated conjugated diene block copolymer in the layer (III) and improving the heat cycle resistance and hot water resistance of the laminate of the present embodiment, the hydrogenation ratio of the hydrogenated conjugated diene block copolymer is preferably 90% or less, more preferably 88% or less, still more preferably 86% or less, and even more preferably 85% or less.

In general, acrylic resins have unsaturated bonds with radical reactivity due to side reactions during polymerization, and in the case where the hydrogenated conjugated diene block copolymer has a hydrogenation ratio of 90% or less, the unsaturated bonds derived from a conjugated diene that remain in the hydrogenated conjugated diene block copolymer without being hydrogenated and the unsaturated bonds of the acrylic resin undergo radical reactions and are covalently bonded during laminate production, which tends to improve the heat cycle resistance and hot water resistance of the laminate of the present embodiment.

On the other hand, it is preferable not to leave too many unsaturated bonds in the hydrogenated conjugated diene block copolymer from the viewpoint of preventing gelation and suppressing mold staining.

Also, reducing the amount of unreacted modifying agent tends to suppress mold staining.

The lower limit of the hydrogenation ratio of the hydrogenated conjugated diene block copolymer is preferably 50% or more, more preferably 60% or more, and still more preferably 70% or more, from the previously-mentioned viewpoint of heat aging resistance, weather resistance, and suppression of appearance deterioration and mold staining property of the laminate of the present embodiment due to crosslinking of the hydrogenated conjugated diene block copolymer by itself. In general, it is known that the amount of unsaturated bonds in the hydrogenated conjugated diene block copolymer with a hydrogenation ratio of 50% or more is larger than the amount of unsaturated bonds in the acrylic resin generated from side reactions, and when the hydrogenation ratio of the hydrogenated conjugated diene block copolymer is 50% or more and 90% or less, the above-mentioned heat cycle resistance, hot water resistance, heat aging resistance, weather resistance, appearance, and mold staining resistance of the laminate of the present embodiment tend to be satisfied.

That is, from the viewpoints of heat cycle resistance, hot water resistance, weather resistance, weather resistance, appearance, and mold staining property, it is preferable that the hydrogenated conjugated diene copolymer has amino groups, and still more preferably, the hydrogenation ratio of the hydrogenated conjugated diene block copolymer having amino groups is 50% or more and 90% or less, more preferably 60% or more and 90% or less, still more preferably 70% or more and 90% or less, even more preferably 70% or more and 88% or less, even further preferably 70% or more and 86% or less, and particularly preferably 70% or more and 85% or less.

Also, decorative laminates used as materials for automobile interiors and exteriors, etc., are required to have lighter weight from the viewpoint of fuel efficiency, and the layer (I) mainly composed of an acrylic resin, which serves as the decorative layer, tends to be required to have a thinner wall.

From the above-mentioned viewpoint, the thickness of the layer (I) is preferably 1.5 mm or less, more preferably 1.0 mm or less, still more preferably 0.7 mm or less, even more preferably 0.5 mm or less, and even further preferably 0.3 mm or less.

In the case where the thickness of the layer (I) is thin, specifically 1.5 mm or less, from the viewpoint of productivity of the laminate of the present embodiment, it is preferable to produce a laminate of at least two layers in which the layer (I) and the layer (III) are in contact with each other, followed by lamination on the layer (II) to obtain the laminate of the present embodiment. From the viewpoint of handleability of the laminate of at least two layers including the layer (I) and the layer (III), the content of vinyl aromatic monomer units in the hydrogenated conjugated diene block copolymer used in the layer (III) is preferably 25% by mass or more, more preferably 27% by mass or more, still more preferably 30% by mass or more, and even more preferably 33% by mass or more.

When the content of vinyl aromatic monomer units in the hydrogenated conjugated diene block copolymer is 25% by mass or more, stickiness of the layer (III) can be suppressed, and the winding and/or unrolling properties of the laminate of at least two layers including the layer (I) and the layer (III) tend to be good and excellent handleability tends to be obtained.

From the viewpoint of compatibility with the layer (II), the upper limit of the content of vinyl aromatic monomer units in the hydrogenated conjugated diene block copolymer is preferably 80% by mass or less, more preferably 75% by mass or less, still more preferably 70% by mass or less, even more preferably 65% by mass or less, even further preferably 60% by mass or less, and particularly preferably 55% by mass or less.

[Detailed configuration of hydrogenated conjugated diene block copolymer]

The conjugated diene compound that constitutes the hydrogenated conjugated diene block copolymer used in the adhesive component is a diolefin having a pair of conjugated double bonds.

The hydrogenated conjugated diene block copolymer has two or more polymer blocks selected from the group consisting of the following polymer blocks (A) to (C):

(A) polymer block mainly composed of vinyl aromatic monomer units (polymer block (A));
(B) polymer block mainly composed of conjugated diene monomer units (polymer block (B)); and
(C) polymer block having vinyl aromatic monomer units and conjugated diene monomer units (polymer block (C)).

The polymer block (A) mainly composed of vinyl aromatic monomer units shall have a content of vinyl aromatic monomer units of 80% by mass or more.

Examples of the vinyl aromatic compound used for forming vinyl aromatic monomer units include, but are not limited to, styrene, $\alpha$-methylstyrene, p-methylstyrene, divinylbenzene, 1,1-diphenylethylene, N,N-dimethyl-p-aminoethylstyrene, and N,N-diethyl-p-aminoethylstyrene.

Among these, from the viewpoint of availability and productivity, styrene, $\alpha$-methylstyrene, and 4-methylstyrene are preferred, and styrene is more preferred.

The polymer block (A) may be constituted by one type of vinyl aromatic monomer units, or may be constituted by two or more types of vinyl aromatic monomer units.

From the viewpoint of strength of the laminate, the content of vinyl aromatic monomer units contained in the polymer block (A) shall be greater than 95% by mass, preferably 100% by mass (no other compounds are intentionally added).

The polymer block (B) mainly composed of conjugated diene monomer units shall have a content of conjugated diene monomer units of 80% by mass or more.

The conjugated diene compound used for forming conjugated diene monomer units is a diolefin having a pair of conjugated double bonds. Examples of the diolefin include, but are not limited to, 1,3-butadiene, 2-methyl-1,3-butadiene (isoprene), 2,3-dimethyl-1,3-butadiene, 1,3-pentadiene, 2-methyl-1,3-pentadiene, 1,3-hexadiene, and farnesene.

Among these, from the viewpoint of availability and productivity, preferred examples thereof include 1,3-butadiene and isoprene.

The polymer block (B) may be constituted by one type of conjugated diene monomer units, or may be constituted by two or more types of conjugated diene monomer units.

From the viewpoint of impact resistance of the laminate, the content of conjugated diene monomer units contained in the polymer block (B) shall be greater than 95% by mass, preferably 100% by mass (no other compounds are intentionally added).

Also, to the extent that the appearance and/or adhesive strength of the laminate are not impaired, the hydrogenated conjugated diene block copolymer may contain a polymer block (D) composed of a compound copolymerizable with the vinyl aromatic monomer units and/or the conjugated diene monomer units, other than the vinyl aromatic monomer units and/or the conjugated diene monomer units.

The vinyl aromatic compound and conjugated diene compound used for forming the vinyl aromatic monomer units and conjugated diene monomer units contained in the polymer block (C) having conjugated diene monomer units and vinyl aromatic monomer units may be any compound that can be used in the polymer block (A) and the polymer block (B).

There is no particular limitation with respect to the distribution state of vinyl aromatic monomer units in the polymer block (C), and the vinyl aromatic monomer units in the polymer block (C) may be uniformly distributed or distributed in a tapered manner. Also, there may be a plurality of portions in which the vinyl aromatic monomer units are uniformly distributed and/or distributed in a tapered manner, and there may be a plurality of segments with different contents of vinyl aromatic monomer units.

From the previously-mentioned viewpoint of compatibility, the polymer block (C) shall have a mass ratio of vinyl aromatic monomer units/conjugated diene monomer units of 5/95 to 95/5, preferably 10/90 to 90/10, and more preferably 15/85 to 85/15.

This allows the polymer block (C) to be clearly distinguished from the polymer block (A) and the polymer block (B).

In the hydrogenated conjugated diene block copolymer used in the adhesive component, other compounds copolymerizable with the conjugated diene compound and the vinyl aromatic compound can also be used.

There is no particular limitation on the structure of the hydrogenated conjugated diene block copolymer, but examples thereof include those having structures as represented by the following formulae.

Note that description of the polar groups is omitted in the following formulae.

$(b-c)_n$, $c-(b-c)_n$, $b-(c-b)_n$, $(b-c)_m-X$, $(c-b)_m-X$, $[(b-c)_n]_m-X$, $[(c-b)_n]_m-X$, $[c-(b-c)_n]_m-X$, $[b-(c-b)_n]_m-X$, $[(b-c)_n-b]_m-X$, $[(c-b)-c]_m-X$,

$(a-b)_n$, $b-(a-b)_n$, $a-(b-a)_n$, $(a-b)_m-X$, $(b-a)_m-X$, $[(a-b)_n]_m-X$, $[(b-a)_n]_m-X$, $[b-(a-b)_n]_m-X$, $[a-(b-a)_n]_m-X$, $[(a-b)_n-a]_m-X$, $[(b-a)_n-b]_m-x$,

$(a-c)_n$, $c-(a-c)_n$, $a-(c-a)_n$, $(a-c)_m-X$, $(c-a)_m-X$, $[(a-c)_n]_m-X$, $[(c-a)_n]_m-X$, $[c-(a-c)_n]_m-X$, $[a-(c-a)_n]_m-X$, $[(a-c)_n-a]_m-X$, $[(c-a)_n-c]_m-X$,

$c-(b-a)_n$, $c-(a-b)_n$,

$c-(a-b-a)_n$, $c-(b-a-b)_n$,

$a-c-(b-a)_n$, $a-c-(a-b)_n$,

$a-c-(b-a)_n-b$, $[(a-b-c)_n]_m-X$,

$[a-(b-c)_n]_m-X$, $[(a-b)_n-c]_m-X$,

$[(a-b-a)_n-c]_m-X$,

$[(b-a-b)_n-c]_m-X$, $[(c-b-a)_m-X$,

$[c-(b-a)n]_m-X$, $[c-(a-b-a)_n]_m-X$, $[c-(b-a-b)_n]_m-X$

$a-(b-c)$, $a-(c-b)_n$,

$a-(c-b-c)_n$, $a-(b-c-b)_n$,

$c-a-(b-c)_n$, $c-a-(c-b)_n$,

$c-a-(b-c)_n-b$, $[(c-b-a)_n]_m-X$,

$[c-(b-a)_n]_m-X$, $[(c-b)_n-a]_m-X$,

$[(c-b-c)_n-a]_m-X$,

$[(b-c-b)-a]_n-X$, $[(a-b-c)_n]_m-X$,

$[a-(b-c)_n]_m-X$, $[a-(c-b-c)_n]_m-X$, $[a-(b-c-b)_n]_m-X$

$b-(a-c)_n$, $b-(c-a)_n$,

$b-(c-a-c)_n$, $b-(a-c-a)_n$,

$c-b-(a-c)_n$, $c-b-(c-a)_n$,

$c-b-(a-c)_n-a$, $[(c-a-b)_n]_m-X$,

$[c-(a-b)_n]_m-X$, $[(c-a)_n-b]_m-X$,

$[(c-a-c)_n-b]_m-X$,

$[(b-c-b)-b]_m-X$, $[(b-a-c)_n]_m-X$,

$[b-(a-c)_n]_m-X$, $[b-(c-a-c)_n]_m-X$, $[b-(a-c-a)_n]_m-X$

Note that, in each of the above-described general formulae, a represents the polymer block (A), b represents the polymer block (B), and c represents the polymer block (C).

n is an integer of 1 or more, preferably an integer of 1 to 5.

m is an integer of 2 or more, preferably an integer of 2 to 11.

X represents a residue of coupling agent or a residue of multifunctional initiator.

It is preferable that the hydrogenated conjugated diene block copolymer is a polymer whose basic structure is represented by the structural formula a-b, a-b-a, or a-b-a-b, in particular.

The weight average molecular weight (Mw) of the hydrogenated conjugated diene block copolymer used in the adhesive component (hereinafter, also referred to as "Mw") is preferably 35,000 to 600,000, more preferably 40,000 to 400,000, and still more preferably 45,000 to 300,000, from the viewpoint of mechanical strength, impact resistance, wear resistance, compatibility and moldability of the laminate of the present embodiment.

The weight average molecular weight (Mw) of the hydrogenated conjugated diene block copolymer is the weight average molecular weight (Mw) where the molecular weight of the peak of the chromatogram obtained by gel permeation chromatography (GPC) measurement is determined based on a calibration curve (created using the peak molecular weight of standard polystyrene) determined from the measurement of commercially available standard polystyrene.

The molecular weight distribution of the hydrogenated conjugated diene block copolymer before modification can also be determined from GPC measurement in the same manner, where the molecular weight distribution is the ratio of weight average molecular weight (Mw) to number average molecular weight (Mn), (Mw/Mn).

The molecular weight distribution of a single peak measured by GPC of the hydrogenated conjugated diene block copolymer is preferably 5.0 or less, more preferably 4.0 or less, still more preferably 3.0 or less, and even more preferably 2.5 or less.

The weight average molecular weight and molecular weight distribution of the hydrogenated conjugated diene block copolymer can be controlled to the above-described numerical ranges by adjusting polymerization conditions, such as the amount of monomers added, timing of addition, polymerization temperature, and polymerization time.

[Method for producing hydrogenated conjugated diene block copolymer]

The hydrogenated conjugated diene block copolymer used in the adhesive component of the laminate of the present embodiment can be produced by, without limitation, performing polymerization using a conjugated diene compound and a vinyl aromatic compound in an organic solvent with an organo-alkali metal compound as a polymerization initiator to obtain a block copolymer, then performing a hydrogenation reaction, and performing a modification reaction as necessary, for example.

The hydrogenation reaction and the modification reaction are not limited to this order, and may be reversed.

The aspect of polymerization may be batch polymerization, continuous polymerization, or a combination of these.

The polymerization temperature is generally 0 to 180°C, preferably 20 to 160°C, and more preferably 30 to 150°C.

The polymerization time varies depending on the target conjugated diene block copolymer, but is normally within 48 hours, preferably 0.1 to 10 hours. From the viewpoint of obtaining a conjugated diene polymer with a narrow molecular weight distribution and high strength, it is more preferably 0.5 to 5 hours.

The atmosphere of the polymerization system is not particularly limited, as long as it is in a pressure range sufficient to maintain nitrogen and the solvent in the liquid phase.

It is preferable that there are no impurities, such as water, oxygen, and carbon dioxide, that would deactivate the polymerization initiator and the living polymer in the polymerization system.

Examples of the organic solvent include, but are not limited to: aliphatic hydrocarbons such as n-butane, isobutane, n-pentane, n-hexane, n-heptane, and n-octane; alicyclic hydrocarbons such as cyclohexane, cycloheptane, and methylcyclopentane; and aromatic hydrocarbons such as benzene, xylene, toluene, and ethylbenzene.

As the organo-alkali metal compound that serves as the polymerization initiator, an organolithium compound is preferred.

Examples of the organolithium compound include an organo-monolithium compound, an organo-dilithium compound, and an organo-polylithium compound.

Examples of the organolithium compound include, but are not limited to, ethyllithium, n-propyllithium, isopropyllithium, n-butyllithium, sec-butyllithium, t-butyllithium, n-pentyllithium, n-hexyllithium, benzyllithium, phenyllithium, hexamethylenedilithium, butadienyllithium, isopropenyldilithium, and lithium piperidide.

In the case where a N-containing organolithium compound, such as lithium piperidide, is used as the polymerization initiator, an amino group-modified conjugated diene block copolymer is obtained that has an atomic group where X = 0 in NHx.

Only one of these polymerization initiators may be used alone, or two or more may be used in combination. Among these, from the viewpoint of polymerization activity, n-butyl lithium, sec-butyl lithium, and lithium piperidide are preferred.

The amount of the organo-alkali metal compound that serves as the polymerization initiator used depends on the molecular weight of the target conjugated diene block copolymer, but in general, it is preferably in the range of 0.01 to 1.5 phm (parts by mass based on 100 parts by mass of monomers), more preferably in the range of 0.02 to 0.3 phm, and still more preferably in the range of 0.05 to 0.2 phm.

The vinyl bond content of the conjugated diene block copolymer can be controlled by using a Lewis base, for example, a compound such as ether or amine, as a vinyl bond content adjusting agent (hereinafter, referred to as vinylating agent).

Also, depending on the target vinyl bond content, the amount of vinylating agent used can be adjusted.

Examples of the vinylating agent include, but are not limited to, an ether compound and a tertiary amine compound.

Examples of the ether compound include a linear ether compound and a cyclic ether compound.

Examples of the linear ether compound include, but are not limited to, dimethyl ether, diethyl ether, diphenyl ether, dialkyl ether compounds of ethylene glycol such as ethylene glycol dimethyl ether, ethylene glycol diethyl ether, and ethylene glycol dibutyl ether, and dialkyl ether compounds of diethylene glycol such as diethylene glycol dimethyl ether, diethylene glycol diethyl ether, and diethylene glycol dibutyl ether.

Also, examples of the cyclic ether compound include, but are not limited to, tetrahydrofuran, dioxane, 2,5-dimethyloxolane, 2,2,5,5-tetramethyloxolane, 2,2-bis(2-oxolanyl)propane, and alkyl ethers of furfuryl alcohol.

Examples of the tertiary amine compound include, but are not limited to, trimethylamine, triethylamine, tributylamine, N,N-dimethylaniline, N-ethylpiperidine, N-methylpyrrolidine, N,N,N',N'-tetramethylethylenediamine, N,N,N',N'-tetraethylethylenediamine, 1,2-dipiperidinoethane, trimethylaminoethylpiperazine, N,N,N',N'',N''-pentamethylethylenetriamine, N,N'-dioctyl-p-phenylenediamine, pyridine, tetramethylpropanediamine, and bis[2-(N,N-dimethylamino)ethyl] ether.

Only one of these may be used alone, or two or more may be used in combination.

As the tertiary amine compound, compounds having two amines are preferred. Furthermore, among them, those having a structure exhibiting symmetry in the molecule are more preferred, and N,N,N',N'-tetramethylethylenediamine, bis [2-(N,N-dimethylamino)ethyl] ether, and 1,2-dipiperidinoethane are still more preferred.

In the production process of the conjugated diene block copolymer, polymerization can be performed using the conjugated diene compound and the vinyl aromatic compound in the coexistence of the above-mentioned vinylating agent, the organolithium compound, and an alkali metal alkoxide.

Here, the alkali metal alkoxide is a compound represented by the general formula MOR (in the formula, M is an alkali metal and R is an alkyl group).

The coexistence of the alkali metal alkoxide in the polymerization step provides the effect of controlling the vinyl bond content, molecular weight distribution, polymerization rate, block ratio, and other factors.

It is preferable that the alkali metal in the alkali metal alkoxide is sodium or potassium from the viewpoint of high vinyl bond content, narrow molecular weight distribution, high polymerization rate, and high block ratio.

Examples of the alkali metal alkoxide include, but are not limited to, sodium alkoxides, lithium alkoxides, and potassium alkoxides having alkyl groups having 2 to 12 carbon atoms, and it is preferably a sodium alkoxide or potassium alkoxide having an alkyl group having 3 to 6 carbon atoms. More preferred examples thereof include sodium t-butoxide, sodium t-pentoxide, potassium t-butoxide, and potassium t-pentoxide.

Among these, sodium t-butoxide and sodium t-pentoxide, which are sodium alkoxides, are still more preferred.

The method for hydrogenating unsaturated bonds derived from conjugated diene monomer units of the conjugated diene block copolymer is not particularly limited, but for example, hydrogen is supplied to the conjugated diene block copolymer obtained in the above-described polymerization step in the presence of a hydrogenation catalyst to hydrogenate it, thereby obtaining a hydrogenated conjugated diene block copolymer in which double bond residues of the conjugated diene monomer units are hydrogenated.

The hydrogenation ratio (hydrogenated ratio) can be controlled by, for example, adjusting the amount of catalyst during hydrogenation, and the hydrogenation rate can be controlled by, for example, adjusting the amount of catalyst, hydrogen feed rate, pressure, temperature, and other factors during hydrogenation.

The hydrogenation reaction step is preferably carried out at a timing after the termination of the production reaction of the block copolymer prior to hydrogenation.

In the case where the hydrogenated conjugated diene block copolymer has polar groups, that is, in the case where the condition (i) is satisfied, it is preferable that polar groups of at least one selected from the group consisting of an acid anhydride group, an amino group, a dicarboxyl group, a carboxyl group, an epoxy group, and an oxetanyl group are bonded.

The method for introducing the polar groups into the conjugated diene block copolymer is not particularly limited, and examples thereof include a method in which they are introduced using polymerization initiators having the predetermined functional groups that become the polar groups, a method in which unsaturated monomers having functional groups are polymerized, and a method in which modifying agents that form or contain functional groups at the living terminals are allowed to undergo addition reactions.

Examples of the "modifying agent" include, but are not limited to, aliphatic carboxylic acids such as maleic acid, oxalic acid, succinic acid, adipic acid, azelaic acid, sebacic acid, dodecanedicarboxylic acid, carballylic acid, cyclohexanedicarboxylic acid, and cyclopentanedicarboxylic acid, and aromatic carboxylic acids such as terephthalic acid, isophthalic acid, orthophthalic acid, naphthalenedicarboxylic acid, biphenyldicarboxylic acid, trimesic acid, trimellitic acid, and pyromellitic acid. Examples thereof also include maleic anhydride, itaconic anhydride, pyromellitic anhydride, cis-4-cyclohexane-1,2-dicarboxylic anhydride, 1,2,4,5-benzenetetracarboxylic dianhydride, 5-(2,5-dioxytetrahydroxyfuryl)-3-methyl-3-cyclohexene-1,2-dicarboxylic anhydride, and ε-caprolactam.

Examples of other methods for introducing polar groups into the conjugated diene block copolymer include a method in which an organo-alkali metal compound such as an organolithium compound is allowed to react with the conjugated diene block copolymer (metalation reaction) and modifying agents having functional groups are allowed to undergo addition reactions to the polymer to which the organo-alkali metal is added.

Examples of other methods for introducing polar groups also include a production method in which atomic groups having functional groups are allowed to undergo direct graft addition to an unmodified conjugated diene block copolymer.

Examples of the method of graft addition include a method in which a radical initiator, a conjugated diene block copolymer, and the modifying agent are allowed to react with each other in a solution containing them; a method in which a radical initiator, a conjugated diene block copolymer, and the modifying agent are allowed to react with each other under heating and melting; and a method in which a conjugated diene block copolymer and a compound containing the modifying agent are allowed to react with each other without a radical initiator under heating and melting.

Examples of the method of allowing the components to react with each other include a method in which they are melt kneaded using general mixers such as a Banbury mixer, a single screw extruder, a twin screw extruder, a co-kneader, and a multi-screw extruder. From the viewpoint of cost and production stability, preferred examples thereof include a method in which a single screw, twin screw, or multi-screw extruder is used, and more preferred examples thereof include a method in which a twin screw extruder is used.

During the reaction step, the starting materials may be dry-blended and fed at once, each starting material may be fed separately, or the same materials may be added step by step.

The number of rotations of the screw is preferably 50 to 400 rpm, more preferably 100 to 350 rpm, from the viewpoint of uniformly adding the modifying agent, and is preferably 150 to 300 rpm from the viewpoint of preventing degradation of the resin due to shear and performing uniform addition.

The kneading temperature is preferably 100°C to 350°C from the viewpoint of making it the temperature at which the conjugated diene block copolymer is melted and radicals are generated from the radical initiator. From the viewpoint of controlling the amount of addition and suppressing degradation of the resin due to heat, it is more preferably 120°C to 300°C, still more preferably 150°C to 250°C.

In order to prevent deactivation of radical active species by oxygen, melt kneading is preferably performed under an inert gas such as nitrogen.

Examples of the radical initiator include, but are not limited to, ketone peroxides, peroxyketals, hydroperoxides, dialkyl peroxides, diacyl peroxides, peroxyesters, and peroxydicarbonates. Preferably, it has a one-minute half-life temperature in the kneading temperature range, and more preferably a one-minute half-life temperature between 150°C and 250°C. Examples of such a radical initiator include, but are not limited to, 1,1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butylperoxymaleic acid, t-butyl peroxy-3,5,5-trimethylhexanoate, t-butyl peroxylaurate, t-butyl peroxyisopropylmonocarbonate, t-butyl peroxy-2-ethylhexylmonocarbonate, t-hexyl peroxybenzoate, 2,5-dimethyl-2,5-di(benzoylperoxy)hexane, t-butyl peroxyacetate, 2,2-di-(t-butylperoxy)butane, t-butyl peroxybenzonate, n-butyl 4,4-di-(t-butylperoxy)valerate, di(2-t-butylperoxyisopropyl)benzene, dicumyl peroxide, di-t-hexyl peroxide, 2,5-dimethyl-2,5-di(t-butylperoxy)hexane, t-butylcumyl peroxide, di-t-butyl peroxide, p-methane hydroperoxide, 2,5-dimethyl-2,5-di(t-butylperoxy)-3-hexyne, diisopropylbenzene hydroperoxide, and 1,1,3,3-tetramethylbutyl hydroperoxide.

In particular, from the viewpoint of compatibility with the conjugated diene block copolymer, di(2-t-butylperoxyisopropyl)benzene, dicumyl peroxide, di-t-hexyl peroxide, 2,5-dimethyl-2,5-di(t-butylperoxy)hexane, t-butylcumyl peroxide, di-t-butyl peroxide, and 2,5-dimethyl-2,5-di(t-butylperoxy)hexyne-3 are preferred. In particular, 2,5-dimethyl-2,5-di(t-butylperoxy)hexane and 2,5-dimethyl-2,5-di(t-butylperoxy)-3-hexyne are more preferred.

Examples of other methods for introducing polar groups into the conjugated diene block copolymer also include secondary modification in which they are introduced by allowing the primarily modified conjugated diene block copolymer obtained by the previously-mentioned method and atomic groups having functional groups to react with each other.

Examples of the combination of polar groups include an amino group and a dicarboxyl group, an acid anhydride group and an amino group, a hydroxy group; an isocyanate group and a hydroxy group, a carboxyl group and an amino group, an acid anhydride group and a hydroxy group, a silanol group and a hydroxy group, and an epoxy group and a carboxyl group, but from the viewpoint of reactivity, the combinations of an amino group and a dicarboxyl group, an acid anhydride group and an amino group, a silanol group and a hydroxy group, a dicarboxyl group and an amino group, and an epoxy group and a carboxyl group are preferred, and the combinations of an amino group and a dicarboxyl group, and an acid anhydride group and an amino group are more preferred.

Examples of the method for bonding epoxy groups, acid anhydride groups, and hydroxy groups to the conjugated diene block copolymer as primary modification include the method previously mentioned, and examples of the modifying agent include the modifying agents previously mentioned and epoxy group-containing polymerizable compounds.

Examples of the method for bonding silanol groups to the conjugated diene block copolymer as primary modification include the method previously mentioned, and examples of the modifying agent include bis-(3-triethoxysilylpropyl)-tetrasulfane, bis-(3-triethoxysilylpropyl)-disulfane, ethoxysiloxane oligomers, epoxy group-containing polymerizable compounds, and hydrolyzed products of the compounds having alkoxysilane groups listed as the epoxy group-containing polymerizable compounds previously mentioned.

Examples of the method for bonding amino groups to the conjugated diene block copolymer as primary modification include the method previously mentioned, and examples of the modifying agent include 1,3-dimethyl-2-imidazolidinone, 1,3-diethyl-2-imidazolidinone, N,N'-dimethylpropyleneurea, 1,3-diethyl-2-imidazolidinone, 1,3-dipropyl-2-imidazolidinone, 1-methyl-3-ethyl-2-imidazolidinone, 1-methyl-3-propyl-2-imidazolidinone, 1-methyl-3-butyl-2-imidazolidinone, 1-methyl-3-(2-methoxyethyl)-2-imidazolidinone, 1-methyl-3-(2-ethoxyethyl)-2-imidazolidinone, 1,3-di-(2-ethoxyethyl)-2-imidazolidinone, 1,3-dimethylethylenethiourea, N,N'-diethylpropyleneurea, and N-methyl-N'-ethylpropyleneurea.

Also, examples of the modifying agent include 1-methyl-2-pyrrolidone, 1-cyclohexyl-2-pyrrolidone, 1-ethyl-2-pyrrolidone, 1-propyl-2-pyrrolidone, 1-butyl-2-pyrrolidone, 1-isopropyl-2-pyrrolidone, 1,5-dimethyl-2-pyrrolidone, 1-methoxymethyl-2-pyrrolidone, 1-methyl-2-piperidone, 1,4-dimethyl-2-piperidone, 1-ethyl-2-piperidone, 1-isopropyl-2-piperidone, and 1-isopropyl-5,5-dimethyl-2-piperidone.

Examples of the method for bonding a secondary modifying agent to the primarily modified conjugated diene polymer to which amino groups have been bonded include the method previously mentioned, and examples of the modifying agent include aliphatic carboxylic acids such as maleic acid, oxalic acid, succinic acid, adipic acid, azelaic acid, sebacic acid, dodecanedicarboxylic acid, carballylic acid, cyclohexanedicarboxylic acid, and cyclopentanedicarboxylic acid, and aromatic carboxylic acids such as terephthalic acid, isophthalic acid, orthophthalic acid, naphthalenedicarboxylic acid, biphenyldicarboxylic acid, trimesic acid, trimellitic acid, and pyromellitic acid.

Examples thereof also include maleic anhydride, itaconic anhydride, pyromellitic anhydride, cis-4-cyclohexane-1,2-dicarboxylic anhydride, 1,2,4,5-benzenetetracarboxylic dianhydride, and 5-(2,5-dioxytetrahydroxyfuryl)-3-methyl-3-cyclohexene-1,2-dicarboxylic anhydride.

There is no particular restriction on the shape of the resulting polar group-containing conjugated diene block copolymer, but examples thereof include pellet, sheet, strand, and chip forms. It can also be directly made into a molded product after melt kneading.

[Method for producing laminate]

The laminate of the present embodiment is a laminate in which two layers or three or more layers containing each of the above-mentioned layers and components are laminated, and can be produced by widely employing known methods.

The method for producing the laminate is not limited, and a variety of conventionally known methods can be employed.

Since the laminate of the present embodiment has good adhesiveness, even without performing dry lamination, etc., using organic solvents, it can be made into a laminate having good adhesiveness by the molding methods as described below.

Examples of the molding methods include a method in which inflation films, T-die films, sheets, pipes, and other forms are made by the co-extrusion method in which individual molten resins that have been melted in an extruder are fed into a multilayer die and laminated and molded in the die, and co-injection molding in which individual molten resins are injected into the same mold with time lags.

Extrusion laminate molding can also be employed in which a resin film that constitutes one of the layers is molded in advance, and other layers are melt extruded onto it.

Furthermore, resin films that constitute the layers can also be molded in advance, and then these layers can be fused by applying heat to make them into a laminate.

Also, after obtaining a laminate by the molding methods as described above, the laminate can be stretched to make a stretched laminate.

The stretched laminate may be heat set or may be made into a product without heat setting. In the case where heat setting is not performed, since the stretched laminate has the property of being shrunk by stress release upon subsequent heating, it can be used as a shrink film. Furthermore, it can be made into a drawn molded container or the like through secondary processing such as vacuum molding and pressure molding.

Also, in the case where the laminate has an adhesive layer (III), the adhesive layers (layer (III)) may be provided on both adherends (layer (I) and layer (II)) in advance, and then the adherends may be laminated for adhesion. In order to perform adhesion firmly, the laminate may be pressurized, and the pressurization may be performed over the entire laminate or pressure may be applied only to the portion where the adhesive layer has been provided. There is no particular restriction on the pressurization method, and there is no particular restriction on the pressure either, as long as the pressure is such that the adhesive layer is not significantly deformed.

There is no limitation on the shape of the laminate, which may be a flat shape such as film, sheet, or plate, a pipe shape, a bag shape, or an irregular shape.

The laminate of the present embodiment may have layers other than the layer (I) mainly composed of an acrylic resin, the layer (II) mainly composed of a polyolefin resin, the adhesive layer (III), and the layer (IV) containing a polyolefin resin and an adhesive component (hereinafter, sometimes referred to as "other layers").

There is no limitation on the materials that constitute the other layers, and they may be not only resin layers, but also metal layers.

There is no limitation on the materials of other resin layers that constitute the laminate, and examples thereof include thermoplastic resins such as polyolefin resins (excluding those contained in the layer (II)); polyphenylene ether resins; polyamide resins such as nylon 6, nylon 66, and nylon 11; polyester resins such as polyethylene terephthalate and polybutylene terephthalate (excluding those contained in the component (A)); (meth)acrylic resins such as polymethyl methacrylate resins; and styrene resins such as polystyrene, and various thermoplastic elastomers.

Also, to the extent that the effects of the present invention are not hindered, various additives and other materials can be compounded in each layer of the laminate.

Examples of the additives include various thermal stabilizers, antioxidants, ultraviolet absorbers, light stabilizers, anti-aging agents, nucleating agents, plasticizers, impact improvers, compatibilizers, defoaming agents, thickeners, crosslinking agents, surfactants, lubricants, mold release agents, antiblocking agents, processing aids, antistatic agents, flame retardants, flame retardant aids, fillers, and colorants. Only one of these additives may be used, or two or more may be used together in any combination and ratio.

Examples of the thermal stabilizers and antioxidants include hindered phenols, phosphorus compounds, hindered amines, sulfur compounds, copper compounds, and alkali metal halides.

Flame retardants are broadly classified into halogenated flame retardants and non-halogenated flame retardants, and non-halogenated flame retardants are preferred from an environmental standpoint. Examples of the non-halogenated flame retardants include phosphorus flame retardants, hydrated metal compound (aluminum hydroxide and magnesium hydroxide) flame retardants, nitrogen-containing compound (melamine and guanidine) flame retardants, and inorganic compound (borate and molybdenum compound) flame retardants.

Fillers are broadly classified into organic fillers and inorganic fillers. Examples of the organic fillers include naturally occurring polymers such as starch, cellulose fine particles, wood flour, bean curd refuse, rice hulls, and bran, as well as modified products thereof. Also, examples of the inorganic fillers include talc, calcium carbonate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whiskers, ceramic whiskers, potassium titanate, boron nitride, graphite, and carbon fibers.

Furthermore, in the case where the laminate of the present embodiment is in a configuration having a layer (IV) containing an adhesive component and a polyolefin resin, the resin composition containing the polyolefin resin and the adhesive component can be obtained by mixing each of the above-mentioned components in a predetermined proportion.

There is no particular restriction on the method of mixing, as long as the starting material components are uniformly dispersed. That is, by mixing each of the above-mentioned starting material components, etc., at the same time or in an arbitrary order, a resin composition in which each component is uniformly dispersed can be obtained. For more uniform mixing and dispersion, it is preferable to melt mix predetermined amounts of the above-described starting material components, and for example, each starting material component, etc., of the resin composition may be mixed in an arbitrary order and then heated, or all starting material components, etc., may be mixed while being melted sequentially, or each starting material may be compounded as appropriate (dry blended) and melt mixed during molding to produce the target molded body.

There is no particular restriction on the mixing method or mixing conditions as long as each starting material component, etc., is uniformly mixed; however, from the viewpoint of productivity, for example, methods are preferred in which the starting materials are mixed using a tumbler blender, a V-type blender, a ribbon blender, a Henschel mixer, or the like, and then melt kneaded with a continuous kneader such as a single screw extruder or a twin screw extruder, and a batch-type kneader such as a mill roll, a Banbury mixer, a pressurizing kneader, or the like. There is no limitation on the production conditions when producing the resin composition by these methods, and they can be set as appropriate under well-known conditions. The temperature during melt mixing may be any temperature as long as at least one of the starting material components is in a molten state, but normally, the temperature at which all of the components used are melted is selected, and melt mixing can be generally performed at 150 to 250°C.

(Preferred forms of method for producing laminate)

As the method for producing the laminate of the present embodiment, the following method is particularly preferred.

That is, it is preferably a method for producing a laminate having: a layer (I) mainly composed of an acrylic resin; a layer (II) mainly composed of a polyolefin resin; and an adhesive layer (III) provided between the layer (I) and the layer (II), the method including: a step of laminating the layer (I) and the layer (III) so that they are brought into contact with each other to obtain a laminate of at least two layers; and a step of laminating the layer (II) so that the layer (III) of the laminate of at least two layers and the layer (II) are brought into contact with each other.

Such a production method is suitable in the case where the layer (I) is a thin layer with a thickness of 1.5 mm or less.

Also, from the viewpoint of obtaining a laminate that is excellent in appearance and is excellent in heat cycle resistance and/or hot water resistance, it is preferable to laminate the layer (I) and the layer (III) in a molten state and cool them in the step of laminating the layer (I) and the layer (III).

There is no particular limitation on the molding method, but examples thereof include a molding method in which inflation films, T-die films, and other forms are made by the co-extrusion method in which individual molten resins that have been melted in an extruder are fed into a multilayer die and laminated and molded in the die.

Also, from the viewpoint of productivity, in the step of obtaining a laminate of at least two layers in which the layer (I) and the layer (III) of the laminate are in contact with each other, and further laminating the layer (II) on the laminate, there may be performed a step of installing the laminate of at least two layers in a mold, pouring the polyolefin resin constituting the layer (II) into the mold in a molten state, and cooling them for lamination to obtain the target laminate of the present embodiment.

Examples

Hereinafter, the present embodiment will be described in detail with reference to specific Examples and Comparative Examples, but the present invention is not limited in any way to the following Examples and Comparative Examples.

The methods for measuring the structure and physical properties of the hydrogenated conjugated diene block copolymers used in the adhesive component in Examples and Comparative Examples, as well as the methods for evaluating the laminates, are shown below.

[Evaluation of structure and physical properties of hydrogenated conjugated diene block copolymers and of laminates]

The methods for measuring the structure and physical properties of the hydrogenated conjugated diene polymers are shown below.

((1) Vinyl bond content of hydrogenated conjugated diene block copolymer)

The vinyl bond content of the hydrogenated conjugated diene block copolymer with respect to 100 mol% of the total conjugated diene monomer units was measured by proton nuclear magnetic resonance ($^1$H-NMR) using the hydrogenated conjugated diene block copolymer.

The measurement was performed using ECS400 (manufactured by JEOL Ltd.) as the measurement equipment, deuterated chloroform as the solvent, a sample concentration of 50 mg/mL, an observation frequency of 400 MHz, tetramethylsilane as the chemical shift standard, a pulse delay of 2.904 seconds, 64 scans, a pulse width of 45°, and a measurement temperature of 26°C.

After calculating the integrated value per 1H for each bonding mode from the integrated values of the signals attributed to 1,4-bond and 1,2-bond, the vinyl bond content was calculated from the ratios of 1,4-bond and 1,2-bond.

((2) Hydrogenation ratio of unsaturated bonds of conjugated diene monomer units in hydrogenated conjugated diene block copolymer)

The hydrogenation ratio of the hydrogenated conjugated diene copolymer was measured by proton nuclear magnetic resonance ($^1$H-NMR) using the hydrogenated conjugated diene copolymer.

The measurement conditions and method for processing measurement data were the same as in (1) above.

The hydrogenation ratio was determined by calculating the integrated values of the signal derived from the remaining double bonds at 4.5 to 5.5 ppm and the signal derived from the hydrogenated conjugated diene, and calculating the ratios thereof.

((3) Content of vinyl aromatic monomer units in hydrogenated conjugated diene block copolymer (hereinafter, also referred to as "styrene content"))

The content of vinyl aromatic monomer units was measured by the proton nuclear magnetic resonance ($^1$H-NMR) method using the hydrogenated conjugated diene block copolymer.

The measurement was performed using ECS400 (manufactured by JEOL Ltd.) as the measurement equipment, deuterated chloroform as the solvent, a sample concentration of 50 mg/mL, an observation frequency of 400 MHz, tetramethylsilane as the chemical shift standard, a pulse delay of 2.904 seconds, 64 scans, a pulse width of 45°, and a measurement temperature of 26°C.

The styrene content was calculated using the integrated value of the total styrene aromatic signals at 6.2 to 7.5 ppm of the spectrum.

The styrene content was also confirmed by calculating the content of vinyl aromatic monomer units in every polymer sampled at each step during the polymerization process of the conjugated diene block copolymer before hydrogenation.

((4) Weight average molecular weight of hydrogenated conjugated diene block copolymer)

The weight average molecular weight of the hydrogenated conjugated diene block copolymer was measured by GPC [device: HLC8220 (manufactured by Tosoh Corporation), column: TSKgel SUPER-HZM-N (4.6 mm × 30 cm)].

Tetrahydrofuran was used as the solvent.

The weight average molecular weight was determined from the molecular weight of the peak of the chromatogram using a calibration curve (created using the peak molecular weight of standard polystyrene) determined from the measurement of commercially available standard polystyrene.

Note that, as for the molecular weight in the case where there are a plurality of peaks in the chromatogram, the weight average molecular weight was determined from the molecular weight of each peak and the compositional ratio of each peak (determined from the area ratios of the respective peaks in the chromatogram).

((5) Modification ratio of amino group-modified hydrogenated conjugated diene block copolymer)

Utilizing the characteristic that the modified component is adsorbed on a GPC column packed with silica gel, for a sample solution containing the hydrogenated conjugated diene block copolymer and low molecular weight internal standard polystyrene (PS), the proportion of the hydrogenated conjugated diene block copolymer with respect to the standard polystyrene in the chromatogram measured in (5) above, and the proportion of the hydrogenated conjugated diene block copolymer with respect to the standard polystyrene in the chromatogram measured by silica-based column GPC [device: LC-10 (manufactured by Shimadzu Corporation), column: Zorbax (manufactured by DuPont de Nemours, Inc.)] were compared, the amount adsorbed on the silica column was measured from the difference therebetween, and this proportion was used as the modification ratio.

The modification ratio was calculated by the following expression as the ratio of terminals being amino groups with specific structure (%).

$$\text{Ratio of terminals being amino groups with specific structure (\%)} = \frac{(a/b) - (c/d)}{(a/b)} \times 100$$

a: Area of all polymers measured with polystyrene gel (PLgel) (%)
b: Area of low molecular weight internal standard PS measured with polystyrene gel (PLgel) (%)
c: Area of all polymers measured with silica-based column (Zorbax) (%)
d: Area of low molecular weight internal standard PS measured with silica-based column (Zorbax) (%)

((6) Modification ratio of maleic anhydride-modified hydrogenated conjugated diene block copolymer)

The maleic anhydride-modified hydrogenated conjugated diene block copolymer was dissolved in toluene, and titration was performed with a methanol solution of sodium methoxide with a factor of 1 ± 0.05 for calculation.

Evaluation of the characteristics of the laminate is shown below.

((7) Adhesiveness (adhesive strength))

For Examples 1 to 31 and Comparative Examples 1 to 12, after allowing the laminate mentioned later to stand still at a temperature of 25°C and a humidity of 50% for 24 hours, a 1 cm wide incision was made on the layer (II) mainly composed of a polypropylene resin or the layer (IV) containing a polypropylene resin and an adhesive component mentioned later of the laminate, a peeling test was performed for a length of 10 cm or more using a tensile testing machine, and the adhesive strength (N/m) was calculated from the obtained stress. A higher adhesive strength means more excellent adhesiveness.

Examples 32 to 40 and Comparative Examples 13 to 15 were evaluated with a grid test in accordance with JIS K 5400. After allowing the laminate mentioned later to stand still at a temperature of 25°C and a humidity of 50% for 24 hours, 100 incisions of 1 mm$^2$ square were made on the side of the layer (I) mainly composed of an acrylic resin, reaching up to the adhesive layer (III). Cellophane tape ((R), manufactured by Nichiban Co., Ltd., CT28) was pressed onto the incisions with a finger from above to adhere to the layer (I) mainly composed of an acrylic resin, and then peeled off. Out of the 100 incisions, no peeling off of the layer (I) mainly composed of an acrylic resin in all squares was defined as a residual ratio of 100%, and the evaluation was made according to the following criteria.

◎ Residual ratio of 95% or more
O: Residual ratio of 80% or more
△: Residual ratio of greater than 50%
×: Residual ratio of 50% or less

((8) Impact resistance)

After keeping the laminate (100 mm × 100 mm) at 23°C (normal temperature) or -30°C for 24 hours or longer, 2 cm on four sides of the laminate were fixed and a steel ball with a mass of 1.04 kg was dropped freely onto the laminate from a height of 1.0 m and 0.5 m, and the evaluation was made according to the criteria shown below.

O: The steel ball does not penetrate and broken fragments do not scatter.
△: The steel ball penetrates, but broken fragments do not scatter.
×: The steel ball penetrates and broken fragments scatter.

((9) Vibration damping property)

In accordance with JIS K 7391, the loss factor of the laminate at normal temperature was calculated by the cantilever method and the half value width method.

As for the vibration method, a non-contact electromagnetic vibrator was used for steady vibration.

The obtained loss factor was evaluated according to the following criteria.

O: 0.020 or more
×: less than 0.020

((10) Appearance)

The layer (I) mainly composed of an acrylic resin of the laminate was visually observed and the appearance was evaluated according to the criteria shown below.

◎: There is no cloudiness.
O: There is slight cloudiness.
△: Bubbles are slightly present (no cloudiness or slight cloudiness).
×: There is cloudiness and/or a large amount of bubbles are present.

((11) Mold staining property)

In the fabrication of the laminate mentioned later, the mold was visually observed after 20 times of consecutive fabrication, and the appearance was evaluated according to the criteria shown below.

O: There is no mold staining.
△: There is slight mold staining.

×: There is mold staining.

((12) Heat cycle resistance)

For the laminate mentioned later, a heat cycle test of 100 cycles was performed, with -40°C/15 minutes and 80°C/15 minutes as one cycle, and then the laminate was returned to room temperature. Thereafter, in the same procedure as described in (7) above, the adhesiveness (adhesive strength) was evaluated with a grid test in accordance with JIS K 5400. The residual ratio obtained in (7) above was compared with the residual ratio obtained in the grid test after the heat cycle test, and the rate of decrease in adhesive strength after the heat cycle test was evaluated according to the following criteria.

◎: 5% or less
O: 15% or less
△: less than 30%
×: 30% or more

((13) Hot water resistance)

The laminate mentioned later was immersed in hot water at 40°C for 24 hours, then taken out, and the moisture was wiped off.
Thereafter, in the same procedure as described in (7) above, the adhesiveness (adhesive strength) was evaluated with a grid test in accordance with JIS K 5400. The residual ratio obtained in (7) above was compared with the residual ratio obtained in the grid test after the hot water immersion, and the rate of decrease in adhesive strength after the hot water immersion was evaluated according to the following criteria.

◎: 5% or less
O: 15% or less
△: less than 30%
×: 30% or more

((14) Unrolling property)

For the two-layer films composed of the layer (I) mainly composed of an acrylic resin and the layer (III) mainly composed of a polyolefin resin in Examples 32 to 40 and Comparative Examples 13 to 35 mentioned later, they were co-extruded using the multilayer T-die extruder mentioned later, wound, and then evaluated for their unrolling property according to the following criteria.

O: Unrollable
×: Not unrollable

[Hydrogenated conjugated diene block copolymer]

(Modifying agent)

The following compounds were used as the modifying agent for production of the hydrogenated conjugated diene block copolymer.

Maleic anhydride (manufactured by Fuso Chemical Co., Ltd.)
1,3-dimethyl-2-imidazolidinone (all manufactured by Tokyo Chemical Industry Co., Ltd.)

(Preparation of hydrogenation catalyst)

The hydrogenation catalyst used in the hydrogenation reaction of the hydrogenated conjugated diene copolymer was prepared by the following method.
1 L of dried and purified cyclohexane was placed in a reaction vessel purged with nitrogen, 100 millimoles of bis(η5-cyclopentadienyl)titanium dichloride was added, and a n-hexane solution containing 200 millimoles of trimethylaluminum was added while stirring thoroughly, and the reaction continued at room temperature for about 3 days to obtain the hydrogenation catalyst.

(Production of hydrogenated conjugated diene block copolymer)

Using a vinyl aromatic compound and a conjugated diene, the hydrogenated conjugated diene block copolymer was prepared as follows.

The physical properties are shown in Table 1 to Table 3.

Note that, in "Structure" of Table 1 to Table 3, A represents the polymer block (A) mainly composed of vinyl aromatic monomer units, B represents the polymer block (B) mainly composed of conjugated diene monomer units, and C represents the polymer block (C) having vinyl aromatic monomer units and conjugated diene monomer units.

<Fabrication of hydrogenated conjugated diene block copolymer (1)>

Using a tank reactor (internal volume 10 L) equipped with a stirring device and a jacket, batch polymerization was performed.

At first, a cyclohexane solution containing 15 parts by mass of styrene (concentration 20% by mass) was fed.

Next, 0.14 parts by mass of n-butyllithium was added with respect to 100 parts by mass of all monomers, 0.25 mol of tetramethylethylenediamine (TMEDA) was added with respect to 1 mole of n-butyllithium, and polymerization was performed at 70°C for 15 minutes.

Next, a cyclohexane solution containing 70 parts by mass of butadiene (concentration 20% by mass) was added, and polymerization was performed at 70°C for 30 minutes.

Next, a cyclohexane solution containing 15 parts by mass of styrene (concentration 20% by mass) was fed, and polymerization was performed at 70°C for 15 minutes.

Thereafter, methanol was added to terminate the polymerization reaction, and a conjugated diene copolymer was obtained.

Next, the hydrogenation catalyst prepared as described above was added to the obtained conjugated diene copolymer at 70 ppm on a Ti basis based on 100 parts by mass of the conjugated diene copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (1) was obtained.

The hydrogenated conjugated diene block copolymer (1) obtained as described above had a styrene content of 30% by mass, a weight average molecular weight of $7.1 \times 10^4$, a vinyl bond content of 35%, and a hydrogenation ratio of 98%.

The hydrogenated conjugated diene block copolymer (1) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (1)-M.

For the obtained maleic anhydride-modified hydrogenated modified conjugated diene block copolymer (1)-M, titration was performed under the conditions previously mentioned. The modification ratio was 1.1% by mass.

<Hydrogenated conjugated diene block copolymer (2)>

The same operations were performed as for the hydrogenated conjugated diene block copolymer (1), except that 1.1 moles of 1,3-dimethyl-2-imidazolidinone (hereinafter, also abbreviated as "DMI") was added with respect to 1 mole of n-butyllithium before adding methanol, the reaction was performed at 70°C for 15 minutes, and methanol was added after the reaction was completed.

The terminal amine-modified hydrogenated conjugated diene block copolymer (2) obtained as described above had a styrene content of 30% by mass, a weight average molecular weight of $7.0 \times 10^4$, a vinyl bond content of 35%, a modification ratio of 80% (the number of modification groups per polymerized chain was 0.80), and a hydrogenation ratio of 74%.

<Fabrication of hydrogenated conjugated diene block copolymer (3)>

Using a tank reactor (internal volume 10 L) equipped with a stirring device and a jacket, batch polymerization was performed.

At first, a cyclohexane solution containing 20 parts by mass of styrene (concentration 20% by mass) was fed.

Next, 0.041 parts by mass of n-butyllithium was added with respect to 100 parts by mass of all monomers, 0.16 mol of tetramethylethylenediamine (TMEDA) was added with respect to 1 mole of n-butyllithium, and polymerization was performed at 70°C for 15 minutes.

Next, a cyclohexane solution containing 45 parts by mass of styrene and 35 parts by mass of butadiene (concentration 20% by mass) was added, and polymerization was performed at 70°C for 45 minutes.

Next, 0.5 mol of ethyl benzoate was added with respect to 1 mol of n-butyllithium, and polymerization was performed at 70°C for 10 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the conjugated diene block copolymer, and a hydrogenated conjugated diene block copolymer (3) was obtained.

The hydrogenated conjugated diene block copolymer (3) obtained as described above had a styrene content of 65% by mass, a weight average molecular weight of $19.0 \times 10^4$, a vinyl bond content of 25%, and a hydrogenation ratio of 98%.

The hydrogenated conjugated diene block copolymer (3) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (3)-M.

For the obtained maleic anhydride-modified hydrogenated modified conjugated diene block copolymer (3)-M, titration was performed under the conditions previously mentioned. The modification ratio was 0.5% by mass.

<Fabrication of hydrogenated conjugated diene block copolymer (4)>

Using a tank reactor (internal volume 10 L) equipped with a stirring device and a jacket, batch polymerization was performed.

At first, a cyclohexane solution containing 6.0 parts by mass of styrene (concentration 20% by mass) was fed.

Next, 0.073 parts by mass of n-butyllithium was added with respect to 100 parts by mass of all monomers, 0.5 mol of tetramethylethylenediamine (TMEDA) was added with respect to 1 mole of n-butyllithium, and polymerization was performed at 70°C for 15 minutes.

Next, a cyclohexane solution containing 8.0 parts by mass of styrene and 80 parts by mass of butadiene (concentration 20% by mass) was added, and polymerization was performed at 70°C for 45 minutes.

Next, a cyclohexane solution containing 6.0 parts by mass of styrene (concentration 20% by mass) was added, and polymerization was performed at 70°C for 15 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (4) was obtained.

The hydrogenated conjugated diene block copolymer (4) obtained as described above had a styrene content of 20% by mass, a weight average molecular weight of $14.0 \times 10^4$, a vinyl bond content of 45%, and a hydrogenation ratio of 98%.

The hydrogenated conjugated diene block copolymer (4) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (4)-M.

For the obtained maleic anhydride-modified hydrogenated modified conjugated diene block copolymer (4)-M, titration was performed under the conditions previously mentioned. The modification ratio was 0.8% by mass.

<Fabrication of hydrogenated conjugated diene block copolymer (5)>

Using a tank reactor (internal volume 10 L) equipped with a stirring device and a jacket, batch polymerization was performed.

At first, a cyclohexane solution containing 7.5 parts by mass of styrene (concentration 20% by mass) was fed.

Next, 0.062 parts by mass of n-butyllithium was added with respect to 100 parts by mass of all monomers, 1.5 mol of tetramethylethylenediamine (TMEDA) was added with respect to 1 mole of n-butyllithium, and polymerization was performed at 60°C for 15 minutes.

Next, a cyclohexane solution containing 5 parts by mass of styrene and 80 parts by mass of butadiene (concentration 20% by mass) was added, and polymerization was performed at 60°C for 45 minutes.

Next, a cyclohexane solution containing 7.5 parts by mass of styrene (concentration 20% by mass) was added, and polymerization was performed at 60°C for 15 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (5) was obtained.

The hydrogenated conjugated diene block copolymer (5) obtained as described above had a styrene content of 20% by mass, a weight average molecular weight of $15.0 \times 10^4$, a vinyl bond content of 71%, and a hydrogenation ratio of 98%.

<Fabrication of hydrogenated conjugated diene block copolymer (6)>

Using a tank reactor (internal volume 10 L) equipped with a stirring device and a jacket, batch polymerization was performed.

At first, a cyclohexane solution containing 7.5 parts by mass of styrene (concentration 20% by mass) was fed.

Next, 0.062 parts by mass of n-butyllithium was added with respect to 100 parts by mass of all monomers, 1.5 mol of tetramethylethylenediamine (TMEDA) was added with respect to 1 mole of n-butyllithium, and polymerization was performed at 60°C for 15 minutes.

Next, a cyclohexane solution containing 20 parts by mass of styrene and 65 parts by mass of butadiene (concentration 20% by mass) was added, and polymerization was performed at 60°C for 45 minutes.

Next, a cyclohexane solution containing 7.5 parts by mass of styrene (concentration 20% by mass) was added, and polymerization was performed at 60°C for 15 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (6) was obtained.

The hydrogenated conjugated diene block copolymer (6) obtained as described above had a styrene content of 35% by mass, a weight average molecular weight of $15.0 \times 10^4$, a vinyl bond content of 70%, and a hydrogenation ratio of 98%.

<Fabrication of hydrogenated conjugated diene block copolymer (7)>

Using a tank reactor (internal volume 10 L) equipped with a stirring device and a jacket, batch polymerization was performed.

At first, a cyclohexane solution containing 22.5 parts by mass of styrene (concentration 20% by mass) was fed.

Next, 0.079 parts by mass of n-butyllithium was added with respect to 100 parts by mass of all monomers, 1.5 mol of tetramethylethylenediamine (TMEDA) was added with respect to 1 mole of n-butyllithium, and polymerization was performed at 60°C for 20 minutes.

Next, a cyclohexane solution containing 55 parts by mass of butadiene (concentration 20% by mass) was added, and polymerization was performed at 60°C for 35 minutes.

Next, a cyclohexane solution containing 22.5 parts by mass of styrene (concentration 20% by mass) was added, and polymerization was performed at 60°C for 20 minutes. Thereafter, methanol was added to terminate the polymerization reaction.

Next, the hydrogenation catalyst prepared as described above was added to the conjugated diene copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (7) was obtained.

The hydrogenated conjugated diene block copolymer (7) obtained as described above had a styrene content of 45% by mass, a weight average molecular weight of $11.0 \times 10^4$, a vinyl bond content of 71%, and a hydrogenation ratio of 98%.

<Fabrication of hydrogenated conjugated diene block copolymer (8)>

Using a tank reactor (internal volume 10 L) equipped with a stirring device and a jacket, batch polymerization was performed.

At first, a cyclohexane solution containing 7.5 parts by mass of styrene (concentration 20% by mass) was fed.

Next, 0.066 parts by mass of n-butyllithium was added with respect to 100 parts by mass of all monomers, 1.5 mol of tetramethylethylenediamine (TMEDA) was added with respect to 1 mole of n-butyllithium, and polymerization was performed at 60°C for 15 minutes.

Next, a cyclohexane solution containing 85 parts by mass of butadiene (concentration 20% by mass) was added, and polymerization was performed at 60°C for 60 minutes.

Next, a cyclohexane solution containing 7.5 parts by mass of styrene (concentration 20% by mass) was added, and polymerization was performed at 60°C for 15 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (8) was obtained.

The hydrogenated conjugated diene block copolymer (8) obtained as described above had a styrene content of 15% by mass, a weight average molecular weight of $16.0 \times 10^4$, a vinyl bond content of 70%, and a hydrogenation ratio of 98%.

The hydrogenated conjugated diene block copolymer (8) obtained as described above was mixed with maleic anhydride, then supplied to a twin screw extruder where the temperature setting throughout the length of the extruder was 150 to 210°C, and compounded to obtain a maleic anhydride-modified hydrogenated conjugated diene block copolymer (8)-M.

For the obtained maleic anhydride-modified hydrogenated modified conjugated diene block copolymer (8)-M, titration was performed under the conditions previously mentioned. The modification ratio was 0.8% by mass.

<Fabrication of hydrogenated conjugated diene block copolymer (9)>

Using a tank reactor (internal volume 10 L) equipped with a stirring device and a jacket, batch polymerization was performed.

At first, a cyclohexane solution containing 15 parts by mass of styrene (concentration 20% by mass) was fed.

Next, 0.066 parts by mass of n-butyllithium was added with respect to 100 parts by mass of all monomers, 1.5 mol of tetramethylethylenediamine (TMEDA) was added with respect to 1 mole of n-butyllithium, and polymerization was performed at 60°C for 20 minutes.

Next, a cyclohexane solution containing 70 parts by mass of butadiene (concentration 20% by mass) was added, and polymerization was performed at 60°C for 50 minutes.

Next, a cyclohexane solution containing 7.5 parts by mass of styrene (concentration 20% by mass) was added, and polymerization was performed at 60°C for 20 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer.

The hydrogenated conjugated diene block copolymer obtained as described above had a styrene content of 30% by mass, a weight average molecular weight of $16.1 \times 10^4$, a vinyl bond content of 70%, and a hydrogenation ratio of 98%.

The hydrogenated conjugated diene block copolymer obtained as described above was mixed with maleic anhydride, then supplied to a twin screw extruder where the temperature setting throughout the length of the extruder was 150 to 210°C, and compounded to obtain a maleic anhydride-modified hydrogenated conjugated diene block copolymer (9)-M.

For the obtained maleic anhydride-modified hydrogenated modified conjugated diene block copolymer (9)-M, titration was performed under the conditions previously mentioned, and the modification ratio was 0.7% by mass.

<Fabrication of hydrogenated conjugated diene block copolymer (10)>

Using a tank reactor (internal volume 10 L) equipped with a stirring device and a jacket, batch polymerization was performed.

At first, a cyclohexane solution containing 7.5 parts by mass of styrene (concentration 20% by mass) was fed.

Next, 0.15 parts by mass of n-butyllithium was added with respect to 100 parts by mass of all monomers, 0.27 mol of tetramethylethylenediamine (TMEDA) was added with respect to 1 mole of n-butyllithium, and polymerization was performed at 70°C for 15 minutes.

Next, a cyclohexane solution containing 85 parts by mass of butadiene (concentration 20% by mass) was added, and polymerization was performed at 60°C for 50 minutes.

Next, a cyclohexane solution containing 7.5 parts by mass of styrene (concentration 20% by mass) was added, and polymerization was performed at 70°C for 15 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (10) was obtained.

The hydrogenated conjugated diene block copolymer (10) obtained as described above had a styrene content of 15% by mass, a weight average molecular weight of $7.0 \times 10^4$, a vinyl bond content of 35%, and a hydrogenation ratio of 98%.

The hydrogenated conjugated diene block copolymer (10) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (10)-M.

For the obtained maleic anhydride-modified hydrogenated modified conjugated diene block copolymer (10)-M, titration was performed under the conditions previously mentioned. The modification ratio was 1.2% by mass.

<Fabrication of hydrogenated conjugated diene block copolymer (11)>

The same operations were performed as for the hydrogenated conjugated diene block copolymer (10), except that 1.1 moles of 1,3-dimethyl-2-imidazolidinone (hereinafter, also abbreviated as "DMI") was added with respect to 1 mole of n-butyllithium before adding methanol, the reaction was performed at 70°C for 15 minutes, and methanol was added after the reaction was completed.

The terminal amine-modified conjugated diene block copolymer (11) obtained as described above had a styrene content of 15% by mass, a weight average molecular weight of $7.0 \times 10^4$, a vinyl bond content of 35%, a modification ratio of 80% by mass (the number of modification groups per polymerized chain was 0.80), and a hydrogenation ratio of 75%.

<Fabrication of hydrogenated conjugated diene block copolymer (12)>

The same operations were performed as for the hydrogenated conjugated diene block copolymer (3), except that 0.90 mol of tetramethylethylenediamine (TMEDA) was added with respect to 1 mole of n-butyllithium. The obtained hydrogenated conjugated diene block copolymer (12) had a styrene content of 65% by mass, a weight average molecular weight of $19.1 \times 10^4$, a vinyl bond content of 54%, and a hydrogenation ratio of 98%.

<Fabrication of hydrogenated conjugated diene block copolymer (13)>

Using a tank reactor (internal volume 10 L) equipped with a stirring device and a jacket, batch polymerization was performed.

At first, a cyclohexane solution containing 50 parts by mass of styrene (concentration 20% by mass) was fed.

Next, 0.041 parts by mass of n-butyllithium was added with respect to 100 parts by mass of all monomers, 0.90 mol of tetramethylethylenediamine (TMEDA) was added with respect to 1 mole of n-butyllithium, and polymerization was performed at 70°C for 30 minutes.

Next, a cyclohexane solution containing 15 parts by mass of styrene and 35 parts by mass of butadiene (concentration 20% by mass) was added, and polymerization was performed at 70°C for 35 minutes.

Next, 0.5 mol of ethyl benzoate was added with respect to 1 mol of n-butyllithium, and polymerization was performed at 70°C for 10 minutes. Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (13) was obtained.

The hydrogenated conjugated diene block copolymer (13) obtained as described above had a styrene content of 65% by mass, a weight average molecular weight of $19.0 \times 10^4$, a vinyl bond content of 55%, and a hydrogenation ratio of 98%.

<Fabrication of hydrogenated conjugated diene block copolymer (14)>

Using a tank reactor (internal volume 10 L) equipped with a stirring device and a jacket, batch polymerization was performed.

At first, a cyclohexane solution containing 37.5 parts by mass of styrene (concentration 20% by mass) was fed.

Next, 0.14 parts by mass of n-butyllithium was added with respect to 100 parts by mass of all monomers, 0.25 mol of tetramethylethylenediamine (TMEDA) was added with respect to 1 mole of n-butyllithium, and polymerization was performed at 70°C for 35 minutes.

Next, a cyclohexane solution containing 25 parts by mass of butadiene (concentration 20% by mass) was added, and polymerization was performed at 70°C for 20 minutes.

Next, a cyclohexane solution containing 37.5 parts by mass of styrene (concentration 20% by mass) was fed, and polymerization was performed at 70°C for 35 minutes.

Thereafter, methanol was added to terminate the polymerization reaction, and a conjugated diene block copolymer was obtained.

Next, the hydrogenation catalyst prepared as described above was added to the obtained conjugated diene block copolymer at 70 ppm on a Ti basis based on 100 parts by mass of the conjugated diene copolymer, and the hydrogenation reaction was performed at a hydrogen pressure of 0.7 MPa and temperature of 80°C for about 1.5 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer.

The hydrogenated conjugated diene block copolymer obtained as described above had a styrene content of 30% by mass, a weight average molecular weight of $7.1 \times 10^4$, a vinyl bond content of 35%, and a hydrogenation ratio of 98%.

The hydrogenated conjugated diene block copolymer obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (14-M).

For the obtained maleic anhydride-modified hydrogenated modified conjugated diene block copolymer (14-M), titration was performed under the conditions previously mentioned. The modification ratio was 1.1% by mass.

<Fabrication of hydrogenated conjugated diene block copolymer (15)>

The same operations were performed as for the hydrogenated conjugated diene block copolymer (3), except that 1.1 moles of 1,3-dimethyl-2-imidazolidinone (hereinafter, also abbreviated as "DMI") was added with respect to 1 mole of n-butyllithium before adding methanol, the reaction was performed at 70°C for 15 minutes, and methanol was added after the reaction was completed.

The terminal amine-modified conjugated diene block copolymer (15) obtained as described above had a styrene content of 65% by mass, a weight average molecular weight of $18.9 \times 10^4$, a vinyl bond content of 26%, a modification ratio of 80% by mass (the number of modification groups per polymerized chain was 0.80), and a hydrogenation ratio of 82%.

<Fabrication of hydrogenated conjugated diene block copolymer (16)>

The same operations were performed as for the hydrogenated conjugated diene block copolymer (1), except that the hydrogenation reaction time was 0.75 hour, and a hydrogenated conjugated diene block copolymer (16) was obtained.

The hydrogenated conjugated diene block copolymer (16) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (16)-M.

For the obtained maleic anhydride-modified hydrogenated modified conjugated diene block copolymer (16)-M, titration was performed under the conditions previously mentioned. The modification ratio was 0.5% by mass.

The terminal maleic anhydride-modified conjugated diene block copolymer (16)-M obtained as described above had a styrene content of 30% by mass, a weight average molecular weight of $7.0 \times 10^4$, a vinyl bond content of 36%, and a hydrogenation ratio of 45%.

<Fabrication of hydrogenated conjugated diene block copolymer (17)>

The same operations were performed as for the hydrogenated conjugated diene block copolymer (1), except that the hydrogenation reaction time was 1 hour, and a hydrogenated conjugated diene block copolymer (17) was obtained.

The hydrogenated conjugated diene block copolymer (17) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (17)-M.

For the obtained maleic anhydride-modified hydrogenated modified conjugated diene block copolymer (17)-M, titration was performed under the conditions previously mentioned. The modification ratio was 0.8% by mass.

The terminal amine-modified conjugated diene block copolymer (17)-M obtained as described above had a styrene content of 30% by mass, a weight average molecular weight of $7.0 \times 10^4$, a vinyl bond content of 35%, and a hydrogenation ratio of 88%.

<Fabrication of hydrogenated conjugated diene block copolymer (18)>

The same operations were performed as for the hydrogenated conjugated diene block copolymer (3), except that the hydrogenation reaction time was 1 hour, and a hydrogenated conjugated diene block copolymer (18) was obtained.

The hydrogenated conjugated diene block copolymer (18) obtained as described above was mixed with maleic anhydride and peroxide (PERHEXA 25B, manufactured by NOF Corporation), then supplied to a twin screw extruder where the temperature setting throughout the length of the extruder was 150 to 210°C, and compounded to obtain a maleic anhydride-modified hydrogenated conjugated diene block copolymer (18)-M.

For the obtained maleic anhydride-modified hydrogenated modified conjugated diene block copolymer (18)-M, titration was performed under the conditions previously mentioned. The modification ratio was 0.8% by mass.

The terminal amine-modified conjugated diene block copolymer (18)-M obtained as described above had a styrene content of 65% by mass, a weight average molecular weight of $18.9 \times 10^4$, a vinyl bond content of 26%, and a hydrogenation ratio of 82%.

<Fabrication of hydrogenated conjugated diene block copolymer (19)>

The same operations were performed as for the hydrogenated conjugated diene block copolymer (9), except that 1.1 moles of 1,3-dimethyl-2-imidazolidinone (hereinafter, also abbreviated as "DMI") was added with respect to 1 mole of n-butyllithium before adding methanol, the reaction was performed at 70°C for 15 minutes, methanol was added after the reaction was completed, and the maleic anhydride modification step was not performed.

The terminal amine-modified conjugated diene block copolymer (19) obtained as described above had a styrene content of 30% by mass, a weight average molecular weight of $7.0 \times 10^4$, a vinyl bond content of 70%, a modification ratio of 80% by mass (the number of modification groups per polymerized chain was 0.80), and a hydrogenation ratio of 88%.

<Fabrication of hydrogenated conjugated diene block copolymer (20)>

Using a tank reactor (internal volume 10 L) equipped with a stirring device and a jacket, batch polymerization was performed.

At first, a cyclohexane solution containing 20 parts by mass of butadiene (concentration 20% by mass) was fed.

Next, 0.068 parts by mass of n-butyllithium was added with respect to 100 parts by mass of all monomers, 0.30 mol of tetramethylethylenediamine (TMEDA) was added with respect to 1 mole of n-butyllithium, and polymerization was performed at 70°C for 15 minutes.

Next, a cyclohexane solution containing 20 parts by mass of styrene and 60 parts by mass of butadiene (concentration 20% by mass) was added, and polymerization was performed at 70°C for 45 minutes.

Next, 1.1 moles of 1,3-dimethyl-2-imidazolidinone (hereinafter, also abbreviated as "DMI") was added with respect to 1 mole of n-butyllithium, and the reaction was performed at 70°C for 15 minutes.

Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.0 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (20) was obtained.

The hydrogenated conjugated diene block copolymer (20) obtained as described above had a styrene content of 20% by mass, a weight average molecular weight of $15.0 \times 10^4$, a vinyl bond content of 35%, and a hydrogenation ratio of 85%.

<Fabrication of hydrogenated conjugated diene block copolymer (21)>

Using a tank reactor (internal volume 10 L) equipped with a stirring device and a jacket, batch polymerization was performed.

At first, a cyclohexane solution containing 10 parts by mass of styrene (concentration 20% by mass) was fed.

Next, 0.068 parts by mass of n-butyllithium was added with respect to 100 parts by mass of all monomers, 0.68 mol of tetramethylethylenediamine (TMEDA) was added with respect to 1 mole of n-butyllithium, and polymerization was performed at 70°C for 15 minutes.

Next, a cyclohexane solution containing 80 parts by mass of butadiene (concentration 20% by mass) was added, and polymerization was performed at 70°C for 45 minutes.

Next, a cyclohexane solution containing 10 parts by mass of styrene (concentration 20% by mass) was added, and polymerization was performed at 70°C for 15 minutes.

Next, 1.1 moles of 1,3-dimethyl-2-imidazolidinone (hereinafter, also abbreviated as "DMI") was added with respect to 1 mole of n-butyllithium, and the reaction was performed at 70°C for 15 minutes.

Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.0 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (21) was obtained.

The hydrogenated conjugated diene block copolymer (21) obtained as described above had a styrene content of 20% by mass, a weight average molecular weight of $15.0 \times 10^4$, a vinyl bond content of 55%, and a hydrogenation ratio of 84%.

<Fabrication of hydrogenated conjugated diene block copolymer (22)>

Using a tank reactor (internal volume 10 L) equipped with a stirring device and a jacket, batch polymerization was performed.

At first, a cyclohexane solution containing 15 parts by mass of styrene (concentration 20% by mass) was fed.

Next, 0.14 parts by mass of n-butyllithium was added with respect to 100 parts by mass of all monomers, 0.23 mol of tetramethylethylenediamine (TMEDA) was added with respect to 1 mole of n-butyllithium, and polymerization was performed at 70°C for 15 minutes.

Next, a cyclohexane solution containing 70 parts by mass of butadiene (concentration 20% by mass) was added, and polymerization was performed at 70°C for 40 minutes.

Next, a cyclohexane solution containing 15 parts by mass of styrene (concentration 20% by mass) was added, and polymerization was performed at 70°C for 15 minutes.

Next, 1.1 moles of 1,3-dimethyl-2-imidazolidinone (hereinafter, also abbreviated as "DMI") was added with respect to 1 mole of n-butyllithium, and the reaction was performed at 70°C for 15 minutes.

Thereafter, methanol was added to terminate the polymerization reaction.

Next, the hydrogenation catalyst prepared as described above was added to the conjugated diene block copolymer obtained as described above at 70 ppm on a Ti basis based on 100 parts by mass of the conjugated diene block copolymer, and the hydrogenation reaction was performed at a hydrogen pressure of 0.7 MPa and temperature of 80°C for about 1.2 hours.

Next, 0.25 parts by mass of octadecyl 3-(3,5-di-t-butyl-4-hydroxyphenyl)propionate as the stabilizer was added with respect to 100 parts by mass of the hydrogenated conjugated diene block copolymer, and a hydrogenated conjugated diene block copolymer (22) was obtained.

The hydrogenated conjugated diene block copolymer (22) obtained as described above had a styrene content of 30% by mass, a weight average molecular weight of $7.0 \times 10^4$, a vinyl bond content of 35%, and a hydrogenation ratio of 94%.

<Fabrication of hydrogenated conjugated diene block copolymer (23)>

The same operations were performed as for the hydrogenated conjugated diene block copolymer (22), except that the hydrogenation reaction time was 1.2 hours. The hydrogenated conjugated diene block copolymer (23) obtained as described above had a styrene content of 30% by mass, a weight average molecular weight of $7.0 \times 10^4$, a vinyl bond content of 35%, and a hydrogenation ratio of 65%.

(Production of polypropylene resin composition)

The conjugated diene copolymers (1) to (23), as well as (1)-M, (3)-M, (4)-M, (8)-M, (9)-M, (10)-M, (16)-M, (17)-M, and (18)-M, were mixed with a polypropylene resin (PL500A, manufactured by SunAllomer Ltd.) to obtain mixtures (polypropylene/conjugated diene copolymer = 80/20). Thereafter, the mixtures were supplied to a twin screw extruder where the temperature setting throughout the length of the extruder was 150 to 220°C, and the obtained strands were cooled and then cut into the shape of pellets, obtaining pellets of polypropylene resin compositions.

[Production of laminate (Examples 1 to 40 and Comparative Examples 1 to 15)]

(Production of laminate (Examples 1 to 18 and Comparative Examples 1 to 6))

A laminate with a three-layer structure composed of the layer (I), layer (II), and layer (III) was produced. At first, each of the hydrogenated conjugated diene block copolymers was press molded at 200°C to fabricate a hydrogenated conjugated diene block copolymer sheet (thickness: 0.5 mm).

Next, the hydrogenated conjugated diene block copolymer sheet was laminated between a 2 mm thick flat plate composed of an acrylic resin (DELPET 80N manufactured by Asahi Kasei Corporation) and a 2 mm thick flat plate composed of a polypropylene resin (PL500A manufactured by SunAllomer Ltd.), and heating and pressure bonding (200°C) was performed in a mold (thickness 4.5 mm) with the same shape as the flat plates to fabricate the laminate.

(Production of laminate (Examples 19 to 31 and Comparative Examples 7 to 12))

A laminate with a two-layer structure composed of the layer (I) and the layer (IV) whose adhesive component contains a polyolefin resin and an adhesive component was produced. At first, a 2 mm thick flat plate composed of an acrylic resin was attached to the mold of an injection molding machine, the cylinder temperature was set to 200°C, and the polypropylene resin composition was injected to produce the laminate.

(Production of laminate (Examples 32 to 40 and Comparative Examples 13 to 15))

A two-layer film in which the layer (I) and the layer (III) are in contact with each other (layer (I) about 30 $\mu$m, layer (III) 10 $\mu$m) was fabricated by coextrusion using a multilayer T-die extruder under the following conditions: extrusion temperature (layer (I): 230°C, layer (III): 200°C) and die temperature (230°C).

Next, the two-layer film was attached to the mold (flat plate, temperature 50°C) of an injection molding machine, the cylinder temperature was set to 200°C, and the polypropylene resin was injected to laminate the layer (II) to fabricate the laminate.

[Examples 1 to 18] and [Comparative Examples 1 to 6]

Using the adhesive component as a single layer (layer (III)), a three-layer laminate composed of the layer (I):

acrylic resin and the layer (II): polypropylene resin was fabricated, and the characteristics of this laminate were evaluated.

[Examples 19 to 31] and [Comparative Examples 7 to 12]

A two-layer laminate composed of a polypropylene resin composition layer (layer (IV)) in which the adhesive component was mixed with a polypropylene resin and an acrylic resin layer (layer (I)) was fabricated, and the characteristics of this laminate were evaluated.

[Examples 32 to 40] and [Comparative Examples 13 to 15]

Using the adhesive component as a single layer (layer (III)), a three-layer laminate composed of the layer (I): acrylic resin of 30 μm and the layer (II): polypropylene resin was fabricated, and the characteristics of this laminate were evaluated.
The structure and physical properties of the hydrogenated conjugated diene block copolymers (1) to (23) are shown in the following Table 1 to Table 3.

[Table 1]

| Hydrogenated conjugated diene block copolymer | | (1) | (1)-M | (2) | (3) | (3)-M | (4) | (4)-M | (5) | (6) | (7) |
|---|---|---|---|---|---|---|---|---|---|---|---|
| Structure | - | A-B-A | A-B-A | A-B-A | A-C/A-C-A | A-C/A-C-A | A-C-A | A-C-A | A-C-B | A-C-B | A-B-A |
| Amount of vinyl aromatic monomer units | % by mass | 30 | 30 | 30 | 65 | 60 | 20 | 20 | 20 | 35 | 45 |
| Vinyl bond content | % | 35 | 35 | 35 | 25 | 25 | 45 | 45 | 71 | 70 | 71 |
| Weight average molecular weight | Ten thousand | 7.1 | 7.1 | 7.0 | 19.0 | 19.0 | 14.0 | 14.0 | 15.0 | 15.0 | 11.0 |
| Hydrogenation ratio | % | 98 | 98 | 74 | 98 | 98 | 98 | 98 | 98 | 98 | 98 |
| Type of functional groups | - | - | Acid anhydride | Amino group | - | Acid anhydride | - | Acid anhydride | - | - | - |
| Conditions satisfied among conditions (i) to (iv) | - | (iv) | (i), (iv) | (i),(iv) | (iii),(iv) | (i),(iii),(iv) | (iii) | (i),(iii) | (ii),(iii) | (ii),(ii-i),(iv) | (ii),(iv) |

EP 4 538 038 A1

[Table 2]

| Hydrogenated conjugated diene block copolymer | | (8) | (8)-M | (9)-M | (10) | (10)-M | (11) | (12) | (13) | (14)-M | (15) |
|---|---|---|---|---|---|---|---|---|---|---|---|
| Structure | - | A-B-A | A-B-A | A-B-A | A-B-A | A-B-A | A-B-A | A-C/A-C-A | A-C/A-C-A | A-B-A | A-C/A-C-A |
| Amount of vinyl aromatic monomer units | % by mass | 15 | 15 | 30 | 15 | 15 | 15 | 65 | 65 | 75 | 65 |
| Vinyl bond content | % | 70 | 70 | 70 | 35 | 35 | 35 | 54 | 55 | 35 | 26 |
| Weight average molecular weight | Ten thousand | 16.0 | 16.0 | 16.1 | 7.0 | 7.0 | 7.0 | 19.1 | 19.0 | 7.1 | 18.9 |
| Hydrogenation ratio | % | 98 | 98 | 98 | 98 | 98 | 75 | 98 | 98 | 98 | 82 |
| Type of functional groups | - | - | Acid anhydride | Acid anhydride | - | Acid anhydride | Amino group | - | - | Acid anhydride | Amino group |
| Conditions satisfied among conditions (i) to (iv) | - | (ii) | (i),(ii) | (i),(ii),(iv) | - | (i) | (i) | (ii), (iii), (iv) | (ii), (iii), (iv) | (i),(iv) | (i),(iii),(i-v) |

EP 4 538 038 A1

[Table 3]

| Hydrogenated conjugated diene block copolymer | | (16)-M | (17)-M | (18)-M | (19) | (20) | (21) | (22) | (23) |
|---|---|---|---|---|---|---|---|---|---|
| Structure | - | A-B-A | A-B-A | A-C/A-C-A | A-B-A | B-C | A-B-A | A-B-A | A-B-A |
| Amount of vinyl aromatic monomer units | % by mass | 30 | 30 | 65 | 30 | 20 | 20 | 30 | 30 |
| Vinyl bond content | % | 36 | 35 | 26 | 70 | 35 | 55 | 35 | 35 |
| Weight average molecular weight | thousand | 7.0 | 7.0 | 18.9 | 7.0 | 15.0 | 15.0 | 7.0 | 7.0 |
| Hydrogenation ratio | % | 45 | 88 | 82 | 88 | 85 | 84 | 94 | 65 |
| Type of functional groups | - | Acid anhydride | Acid anhydride | Acid anhydride | Amino group | Amino group | Amino group | Amino group | Amino group |
| Conditions satisfied among conditions (i) to (iv) | - | (i),(iv) | (i),(iv) | (i), (iii), (iv) | (i),(iv) | (i),(iii) | (i),(ii) | (i),(iv) | (i),(iv) |

The evaluation of the characteristics of the three-layer laminates is shown in the following Table 4 and Table 5.

In Comparative Examples 3 and 4, in which the hydrogenated conjugated diene copolymers (8) and (10) were used, the layer (I) and the layer (II) did not adhere to each other, and no laminate could be obtained.

[Table 4]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|---|---|---|---|---|
| Hydrogenated conjugated diene block copolymer used in layer (III) | | (1)-M | (2) | (3) | (3)-M | (4)-M | (5) | (6) | (7) | (8)-M | (9)-M | (12) | (13) | (14)-M | (15) | (16)-M | (17)-M | (18)-M | (19) |
| Appearance | - | ○ | ◎ | ○ | Δ | Δ | ◎ | ○ | ○ | ○ | ○ | ○ | ○ | Δ | ○ | Δ | ○ | Δ | ◎ |
| Adhesive strength | N/mm | 4.5 | 6.6 | 1.8 | 6.0 | 4.1 | 2.4 | 3.4 | 1.1 | 6.2 | 5.7 | 2.5 | 1.4 | 4.7 | 6.7 | 6.1 | 6.1 | 6.2 | 6.6 |
| Impact resistance | Normal temperature | ○ | ○ | Δ | Δ | Δ | Δ | Δ | Δ | ○ | ○ | Δ | Δ | Δ | Δ | ○ | Δ | Δ | ○ |
| | -30°C  - | Δ | Δ | × | × | × | × | × | × | ○ | Δ | × | × | × | × | Δ | Δ | × | Δ |
| Vibration damping property | - | × | × | ○ | ○ | ○ | ○ | ○ | × | × | × | ○ | ○ | × | ○ | × | × | ○ | × |
| Mold staining property | - | × | ○ | ○ | × | × | ○ | ○ | ○ | × | × | ○ | ○ | × | ○ | × | × | × | Δ |

EP 4 538 038 A1

36

[Table 5]

| | | Comparative Example 1 | Comparative Example 2 | Comparative Example 3 | Comparative Example 4 | Comparative Example 5 | Comparative Example 6 |
|---|---|---|---|---|---|---|---|
| Hydrogenated conjugated diene block copolymer used in layer (III) | - | (1) | (4) | (8) | (10) | (10)-M | (11) |
| Appearance | - | ○ | ○ | - | - | ○ | ○ |
| Adhesive strength | N/mm | 0.34 | 0.40 | - | - | 0.74 | 0.83 |
| Impact resis- tance | Normal temperature | ○ | △ | - | - | ○ | ○ |
| | -30°C | △ | × | - | - | ○ | ○ |
| Vibration damping property | - | × | ○ | - | - | × | × |
| Mold staining property | - | ○ | ○ | - | - | × | ○ |

The evaluation results of the two-layer laminates composed of a polypropylene resin composition layer (layer (IV)) in which the adhesive component was mixed with a polypropylene resin and an acrylic resin layer (layer (I)) are shown in the following Table 6 and Table 7.

In Comparative Examples 9 and 10, in which the hydrogenated conjugated diene copolymers (8) and (10) were used, the layer (I) and the layer (IV) did not adhere to each other, and no laminate could be obtained.

[Table 6]

| | | Example 19 | Example 20 | Example 21 | Example 22 | Example 23 | Example 24 | Example 25 | Example 26 | Example 27 | Example 28 | Example 29 | Example 30 | Example 31 |
|---|---|---|---|---|---|---|---|---|---|---|---|---|---|---|
| Hydrogenated conjugated diene block copolymer contained in polypropylene resin composition | | (1)-M | (2) | (3) | (3)-M | (4)-M | (5) | (6) | (7) | (8)-M | (9)-M | (12) | (13) | (14)-M |
| Appearance | - | ○ | ◎ | ◎ | ○ | ○ | ◎ | ◎ | ○ | ◎ | ○ | ○ | ○ | ○ |
| Adhesive strength | N/mm | 2.3 | 3.6 | 1.0 | 3.3 | 2.0 | 1.2 | 1.8 | 0.8 | 3.4 | 3.0 | 1.1 | 0.8 | 2.2 |
| Impact resistance | Normal temperature | - | ○ | ○ | △ | △ | △ | △ | △ | △ | ○ | ○ | △ | △ | △ |
| | -30°C | - | △ | △ | × | × | × | × | × | × | ○ | △ | × | × | × |
| Vibration damping property | - | × | × | ○ | ○ | ○ | ○ | ○ | × | × | × | ○ | ○ | × |
| Mold staining property | - | × | ○ | ○ | × | × | ○ | ○ | ○ | × | × | ○ | ○ | × |

[Table 7]

| | | | Comparative Example 7 | Comparative Example 8 | Comparative Example 9 | Comparative Example 10 | Comparative Example 11 | Comparative Example 12 |
|---|---|---|---|---|---|---|---|---|
| Hydrogenated conjugated diene block copolymer contained in polypropylene resin composition | | | (1) | (4) | (8) | (10) | (10)-M | (11) |
| Appearance | | - | ○ | ○ | - | - | ○ | ○ |
| Adhesive strength | | N/mm | 0.12 | 0.20 | - | - | 0.38 | 0.43 |
| Impact resistance | Normal temperature | - | ○ | △ | - | - | ○ | ○ |
| | -30°C | - | △ | × | - | - | ○ | ○ |
| Vibration damping property | | - | × | ○ | - | - | × | × |
| Mold staining property | | - | ○ | ○ | - | - | × | ○ |

40

The evaluation results of the three-layer laminates composed of the layer (I): acrylic resin and the layer (II): polypropylene resin using the adhesive component as a single layer (layer (III)) are shown in the following Table 8 and Table 9.

[Table 8]

| | - | Example 32 | Example 33 | Example 29 | Example 30 | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|---|---|
| Hydrogenated conjugated diene block copolymer used in layer (III) | | (1)-M | (2) | (3) | (3)-M | (4)-M | (15) | (16)-M | (17)-M | (18)-M | (19) | (20) | (21) | (22) | (23) |
| Appearance | - | ○ | ◎ | ○ | ○ | ○ | ○ | Δ | ○ | ○ | ◎ | ◎ | ◎ | ◎ | ○ |
| Adhesive strength | - | ○ | ◎ | × | ○ | ○ | ◎ | ○ | ○ | ○ | ◎ | ◎ | ◎ | ○ | ◎ |
| Vibration damping property | - | × | × | ○ | ○ | ○ | ○ | × | × | ○ | × | ○ | × | × | × |
| Mold staining property | - | × | ○ | ○ | × | × | ○ | × | × | × | ○ | ○ | ○ | ○ | × |
| Heat cycle resistance | - | Δ | ◎ | × | Δ | Δ | ◎ | Δ | × | Δ | ○ | ◎ | ◎ | Δ | ◎ |
| Hot water resistance | - | × | ◎ | × | × | × | ◎ | Δ | × | × | ◎ | ◎ | ◎ | Δ | ◎ |
| Unrolling property | - | ○ | ○ | ○ | ○ | × | ○ | ○ | ○ | ○ | ○ | × | × | ○ | ○ |

EP 4 538 038 A1

42

[Table 9]

| | | | Comparative Example 13 | Comparative Example 14 | Comparative Example 15 |
|---|---|---|---|---|---|
| Hydrogenated conjugated diene block copolymer used in layer (III) | | | (1) | (4) | (11) |
| Appearance | - | | ○ | ○ | ○ |
| Adhesive strength | - | | × | × | Δ |
| Vibration damping property | - | | × | ○ | × |
| Mold staining property | - | | ○ | ○ | Δ |
| Heat cycle resistance | - | | × | × | Δ |
| Hot water resistance | - | | × | × | Δ |
| Unrolling property | - | | × | × | × |

From Examples 1 to 40 and Comparative Examples 1 to 15, it was revealed that the laminates of the present invention are excellent in adhesive strength and appearance.

The present application is based on the Japanese Patent Application filed on June 7, 2022 (Japanese Patent Application No. 2022-092456), and the content thereof is incorporated herein by reference.

Industrial Applicability

The laminate of the present invention can achieve both sufficient adhesive strength and appearance, and has industrial applicability as a decorative molded body for members for vehicles, electronic equipment such as televisions, containers, and others.

**Claims**

1.   A laminate comprising:

a layer (I) mainly composed of an acrylic resin;
a layer (II) mainly composed of a polyolefin resin; and
an adhesive layer (III) provided between the layer mainly composed of an acrylic resin and the layer mainly composed of a polyolefin resin,
wherein the adhesive layer (III) is formed from an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and the hydrogenated conjugated diene block copolymer satisfies two or more of the following conditions (i) to (iv):

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and a total content of the conjugated diene monomer units is 100%, a content of the units (a) derived from 1,2-bond and/or 3,4-bond is 50% or more;
<condition (iii)>
the hydrogenated conjugated diene block copolymer has at least one polymer block (C); and
<condition (iv)>
a content of vinyl aromatic monomer units in the hydrogenated conjugated diene block copolymer is 25% by mass or more and 80% by mass or less.

2.   The laminate according to claim 1,

wherein the hydrogenated conjugated diene block copolymer satisfies the condition (i), the condition (iii), and the condition (iv).

3. The laminate according to claim 1,
wherein the hydrogenated conjugated diene block copolymer satisfies the condition (ii), the condition (iii), and the condition (iv).

4. The laminate according to claim 1,
wherein the hydrogenated conjugated diene block copolymer satisfies the condition (i) and the condition (ii), does not satisfy the condition (iv), and further satisfies the following condition (v):
<condition (v)>
a content of vinyl aromatic monomer units in the hydrogenated conjugated diene block copolymer is less than 25% by mass.

5. The laminate according to claim 1,
wherein the hydrogenated conjugated diene block copolymer satisfies the condition (i), and the polar groups that the hydrogenated conjugated diene block copolymer has are of at least one selected from the group consisting of an acid anhydride group, an amino group, a dicarboxyl group, a carboxyl group, an epoxy group, and an oxetanyl group.

6. The laminate according to claim 5,
wherein the polar groups that the hydrogenated conjugated diene block copolymer has are amino groups.

7. The laminate according to claim 6,
wherein a hydrogenated ratio of the hydrogenated conjugated diene block copolymer is 90% or less.

8. The laminate according to claim 1 or 7,
wherein the layer (I) mainly composed of an acrylic resin has a thickness of 1.5 mm or less.

9. The laminate according to claim 7,
wherein the hydrogenated conjugated diene block copolymer satisfies the condition (iv).

10. A method for producing the laminate according to claim 1, the method comprising:

a step of laminating the layer (I) mainly composed of an acrylic resin and the adhesive layer (III) so that they are brought into contact with each other; and
a step of laminating the layer (II) mainly composed of a polyolefin resin so that the adhesive layer (III) and the layer (II) mainly composed of a polyolefin resin are brought into contact with each other.

11. The method for producing the laminate according to claim 10,
wherein the layer (I) mainly composed of an acrylic resin has a thickness of 1.5 mm or less.

12. The method for producing the laminate according to claim 10,

in the step of laminating the layer (I) mainly composed of an acrylic resin and the adhesive layer (III),
the layer (I) mainly composed of an acrylic resin and the adhesive layer (III) are laminated in a molten state.

13. The method for producing the laminate according to claim 10,

in the step of laminating the layer (II) mainly composed of a polyolefin resin,
a laminate having the layer (I) mainly composed of an acrylic resin and the adhesive layer (III) is installed in a mold, and
the polyolefin resin is poured into the mold in a molten state.

14. A laminate comprising:

a layer (I) mainly composed of an acrylic resin; and
a layer (IV) containing a polyolefin resin and an adhesive component,
wherein amounts of the polyolefin resin and the adhesive component are polyolefin resin/adhesive component = 30/70 to 95/5 in mass ratio,
the adhesive component is an adhesive component mainly composed of a hydrogenated conjugated diene block copolymer having two or more polymer blocks selected from the group consisting of a polymer block (A) mainly composed of vinyl aromatic monomer units, a polymer block (B) mainly composed of conjugated diene monomer units, and a polymer block (C) having vinyl aromatic monomer units and conjugated diene monomer units, in which unsaturated bonds in conjugated diene monomer units are hydrogenated, and
the hydrogenated conjugated diene block copolymer satisfies two or more of the following conditions (i) to (iv):

<condition (i)>
the hydrogenated conjugated diene block copolymer has polar groups;
<condition (ii)>
when a conjugated diene block copolymer before hydrogenation of the hydrogenated conjugated diene block copolymer contains units (a) derived from 1,2-bond and/or 3,4-bond of a conjugated diene compound and units (b) derived from 1,4-bond, and a total content of the conjugated diene monomer units is 100%, a content of the units (a) derived from 1,2-bond and/or 3,4-bond is 50% or more;
<condition (iii)>
the hydrogenated conjugated diene block copolymer has at least one polymer block (C); and
<condition (iv)>
a content of vinyl aromatic monomer units in the hydrogenated conjugated diene block copolymer is 25% by mass or more and 80% by mass or less.

15. The laminate according to claim 14,
wherein the hydrogenated conjugated diene block copolymer satisfies the condition (i), the condition (iii), and the condition (iv).

16. The laminate according to claim 14,
wherein the hydrogenated conjugated diene block copolymer satisfies the condition (ii), the condition (iii), and the condition (iv).

17. The laminate according to claim 14,
wherein the hydrogenated conjugated diene block copolymer satisfies the condition (i) and the condition (ii), does not satisfy the condition (iv), and further satisfies the following condition (v):
<condition (v)>
a content of vinyl aromatic monomer units in the hydrogenated conjugated diene block copolymer is less than 25% by mass.

18. The laminate according to claim 14,
wherein the hydrogenated conjugated diene block copolymer satisfies the condition (i), and the polar groups that the hydrogenated conjugated diene block copolymer has are of at least one selected from the group consisting of an acid anhydride group, an amino group, a dicarboxyl group, a carboxyl group, an epoxy group, and an oxetanyl group.

## INTERNATIONAL SEARCH REPORT

International application No.

**PCT/JP2023/015587**

### A. CLASSIFICATION OF SUBJECT MATTER

***B32B 27/30***(2006.01)i; ***B29C 45/14***(2006.01)i; ***B32B 27/32***(2006.01)i
FI: B32B27/30 A; B32B27/32 C; B29C45/14

According to International Patent Classification (IPC) or to both national classification and IPC

### B. FIELDS SEARCHED

Minimum documentation searched (classification system followed by classification symbols)

B32B1/00-43/00; B29C45/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/200014 A1 (KURARAY CO) 23 November 2017 (2017-11-23) <br> claims, paragraphs [0025]-[0027], [0031]-[0032], [0035], [0041], [0045]-[0047], [0052]-[0053], [0092], [0175]-[0181], [0196]-[0198], [0203]-[0206], table 1, paragraphs [0255]-[0256], fig. 1 | 1, 8, 10-13 |
| A | | 2-7, 9, 14-18 |
| A | WO 2019/198827 A1 (KURARAY CO) 17 October 2019 (2019-10-17) <br> claims, paragraphs [0018], [0045]-[0046], [0074]-[0080], [0086]-[0087] | 1-18 |
| A | JP 2014-8694 A (MITSUI CHEMICALS INC) 20 January 2014 (2014-01-20) <br> claims, paragraphs [0034]-[0037], [0059]-[0060], [0074]-[0075], [0088]-[0091], [0097]-[0102] | 1-18 |
| A | JP 11-216810 A (MITSUBISHI CHEMICAL CORP) 10 August 1999 (1999-08-10) <br> claims, paragraphs [0006], [0013]-[0017], [0025], table 2-2 | 1-18 |
| A | JP 2012-59732 A (DENKI KAGAKU KOGYO KK) 22 March 2012 (2012-03-22) <br> claims, paragraphs [0022]-[0026] | 1-18 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/015587**

| Patent document cited in search report | | | Publication date (day/month/year) | Patent family member(s) | | | Publication date (day/month/year) |
|---|---|---|---|---|---|---|---|
| WO | 2017/200014 | A1 | 23 November 2017 | US 2019/0136092 A1 claims, paragraphs [0072]-[0074], [0078]-[0079], [0082], [0088], [0092]-[0094], [0099]-[0100], [0139], [0222]-[0230], [0244]-[0247], [0251]-[0254], table 1, paragraphs [0324]-[0325], fig. 1 EP 3460016 A1 KR 10-2019-0005178 A CN 110139906 A TW 201817594 A | | | |
| WO | 2019/198827 | A1 | 17 October 2019 | (Family: none) | | | |
| JP | 2014-8694 | A | 20 January 2014 | (Family: none) | | | |
| JP | 11-216810 | A | 10 August 1999 | US 6214476 B1 claims, column 3, lines 23-28, column 4, line 59 to column 6, line 47, column 8, lines 55-60, table 2-2 EP 857758 A1 | | | |
| JP | 2012-59732 | A | 22 March 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021181232 A
- JP 2013014027 A
- JP 2022092456 A